# EUROPÄISCHE PATENTANMELDUNG

(11) **EP 4 257 889 A2**
(43) Veröffentlichungstag der Anmeldung: **11.10.2023**
(21) Anmeldenummer: 23020168.3
(22) Anmeldetag: 02.04.2023
(51) Int. Cl.: F24S 20/69, F24S 20/66, F24S 70/16, H02S 20/25

(54) **MULTIFUNKTIONALE AUSSENFLÄCHEN-GEBÄUDEELEMENTE, DEREN HERSTELLUNG UND VERWENDUNG**

(30) Priorität: 08.04.2022 EP 22020159
(71) Anmelder: Universität Stuttgart, 70174 Stuttgart (DE)
(72) Erfinder: GARRECHT, Harald, 76297 Stutensee (DE); FLOSSMANN, Martin, 64342 Seheim Jugenheim (DE)
(74) Vertreter: Pietruk, Claus Peter

(57) **Zusammenfassung**

Beschrieben wird ein Außenflächen-Gebäudeelement mit einem Gussmaterialgrundkörper, zumindest einem Fluidwärmetauscher und einer Photovoltaikanordnung, wobei der Gussmaterialgrundkörper aus Beton bzw. Mörtel gebildet ist, der zumindest einen Fluidwärmetauscher und eine im Gussmaterialgrundkörper eingegossene Fluidfuhrung umfasst und der Fluidwärmetauscher relativ zur Photovoltaikanordnung durch ein in dem Gussmaterialgrundkörper eingegossenes Positioniermittel fixiert ist.

## Beschreibung

Die vorliegende Erfindung betrifft das oberbegrifflich Beanspruchte und bezieht sich somit auf Au-βenflächen-Gebäudeelemente.

Außenflächen-Gebäudeelemente dienen einerseits dem dauerhaften Schutz der Gebäudestruktur vor Witterungseinflüssen wie Regen und dergleichen, sollen aber andererseits oftmals über diesen Schutz hinausgehende Funktionen erfüllen, etwa um den Energiebedarf eines Gebäudes zu verringern. Zugleich müssen die Außenflächengebäudeelemente architektonisch ansprechend sein, preislich zu einem akzeptablen Preis verfügbar sein und sollten überdies weitere Funktionen erfüllen.

Um den Energiebedarf eines Gebäudes mit Außenflächen-Gebäudeelementen zu verringern, sind sowohl photovoltaische als auch solarthermische Anordnungen vorgeschlagen worden. Bei Photovoltaikanordnungen sind Photovoltaikzellen auf der Außenseite des Gebäudes angeordnet, wo sie Sonnenlicht empfangen, um Strom zu erzeugen.

Solarthermische Anordnungen nützen die mit der Sonneneinstrahlung einhergehende Erwärmung zur Erhitzung von Fluid, welches wiederum verwendet werden kann, um Warmwasser zu Heiz- oder anderen Nutzzwecken mit geringerem Primärenergieeinsatz bereitzustellen als beim Erhitzen durch fossile Brennstoffe nötig. Die Erwärmung des Warmwassers kann dabei direkt in Wärmetauschern erfolgen, was höhere Vorlauftemperaturen im Wärmefluid erfordert, oder, alternativ, unter Verwendung von Wärmepumpen, insbesondere dann, wenn die Vorlauftemperaturen aufgrund geringer Sonneneinstrahlung während Schlechtwetterperioden oder im Winter gering bleiben.

Wärmepumpen können auch mit ins Erdreich eingebrachten Wärmetauschern, sog. Geothermiesonden, betrieben werden. Da dies auf Dauer zu einer Abkühlung des Erdreiches und somit zu einer Verschlechterung des Wirkungsgrades führt, ist bereits vorgeschlagen worden, Energie aus Solarthermieanlagen einzusetzen, um das Erdreich um die dort eingebrachten Wärmetauscher herum zu erwärmen bzw. auf einer anfänglichen Temperatur zu halten. Dafür darf die Temperatur bestimmte Werte aber nicht überschreiten. Abhängig von der gewünschten Verwendung des erwärmten Fluids sind also höhere oder niedrigere Fluidtemperaturen sinnvoll.

Die mit einem Wärmetauscher ausgestatteten Außenflächen-Gebäudeelemente lassen sich nicht nur für eine Gewinnung von direkter Solarwärme bei solarem Energieeintrag, sondern auch für die Gewinnung von Umweltwärme über weitestgehend das ganz Jahr hinweg nutzen. Hierzu werden die Au-βenflächen-Gebäudeelemente mit einem Eisspeicher gekoppelt, dem die Umweltwärme selbst bei niedrigen Außentemperaturen so zugeführt werden kann, dass die mittels Wärmepumpe durch den Phasenwechsel von flüssig zu fest entzogene Latentwärme zur Regenerierung des Eisspeichers wieder mit der Umweltwärme nachgespeist wird.

Bei der Photovoltaik ist die Erwärmung hingegen tendenziell eher störend, da der Wirkungsgrad der Photovoltaikzellentemperatur abhängig ist.

Es sind bereits Außenflächen-Gebäudeelemente vorgeschlagen worden, die photovoltaische und solarthermische Anordnungen kombinieren. Dabei sind außenflächenseitig Photovoltaikzellen angeordnet, während eine Fluidleitungsanordnung für das Wärmetauscherfluid dahinter vorgesehen ist. Durch diese Anordnung kann nicht nur sowohl photovoltaisch als auch solarthermisch Energie gewonnen werden, sondern im Idealfall kann auch die Temperatur der Photovoltaikzellen gesenkt werden und somit die Erzielung eines höheren photovoltaischen Wirkungsgrades begünstigt werden; allerdings sollten dann die Fluidtemperaturen tendenziell eher geringer sein, als dies bei der Erwärmung von Brauchwasser und dergleichen gewünscht wird.

Prinzipiell ist es möglich, die Außenflächen-Gebäudeelemente als Fassadenverkleidungen auszugestalten, aber auch Anwendungen wie Dach-Bedeckungen sind ohne weiteres vorstellbar.

Die Ausbildung eines Dachsteines mit Hohlraum, der von Luft durchströmt ist, um ihn zu kühlen, ist aus der DE 3314637 bekannt.

Den Gedanken, Dachpfannen als Thermie-Solarkollektoren zu verwenden, kann man der DE 3404978A1 entnehmen.

Die Verbindung eines Dachsteins mit einem Kollektorschlauch ist aus der DE 201081061 bekannt.

Aus der EP 2149647A2 ist ein Dachziegel mit einer insbesondere metallischen, witterungsbeständigen Außenhaut bekannt, welche die Deckfläche des Dachziegels zumindest teilweise abdeckt und im Dachverband die Dachhaut mitbildet, und mit einem aus Schaum-Kunststoff bestehenden isolierten Körper zur thermischen Isolation des Dachverbandes, wobei der isolierte Körper an die Außenhaut angeschäumt und mit dieser einen mechanischen Verbund bildet, wobei der isolierte Körper auf seiner der Deckfläche abgewandten Seite frei von der witterungsbeständigen Außenhaut ist. Im zentralen Bereich der Deckfläche des Dachsteins kann ein photovoltaisches Element angeordnet sein. Auf seiner zur Deckfläche des Dachziegels gerichteten Seite kann der isolierte Körper eine Wanne bilden, in der wenigstens eine Rohrleitung für eine Flüssigkeit angeordnet ist.

Aus der EP 2230362 A2 ist ein Abdeck-Element bekannt, das verwendbar sein soll, wenn etwa aus Denkmalschutzgründen die Nachrüstung mit Solarkollektoren verboten oder unerwünscht ist. Unter anderem soll ein Solardachziegel auf seiner Oberseite aus einem transparenten, vorzugsweise weitgehend durchsichtigen Material gefertigt sein, wie schlagfestem oder schlagzähen Kunststoff. Die Oberseite und Unterseite des Dachziegels sollen luftdicht miteinander verbunden werden und im Hohlraum eine thermische Solarkollektoreinheit angeordnet werden.

Ein Dachziegel mit Trägerkörper aus wenigstens zwei Schichten ist aus der EP 2336448A2 bekannt. Eine erste Schicht ist mit der Außenhaut und die restlichen Schichten mit der ersten Schicht verwendbar. Die erste Schicht mit der Außenhaut ist vorkonfektioniert und die restlichen Schichten werden nachträglich damit verbunden.

Ein Dachziegel mit Wärmeproduktion und photovoltaischer Energieerzeugung ist aus der WO 2008 / 020462A1 bekannt.

Eine Solardachkonstruktionen, bei der eine Photovoltaikanlage mit Dachelementen aus unter anderem Beton ausgebildet ist und welche Solarzellen aufweist, wobei weiter eine Thermie-Anlage mit Solarkollektoren und einem Rohrleitungssystem verwendet wird, ist aus der DE 2020100161591 bekannt.

Es sind auch schon verschiedene Patentdokumente zur Verwendung von Dachsteinen mit Photovoltaikelementen bekannt. Es ist auch bekannt, dass gerade dann, wenn ein Ziegel für Photovoltaik-Anwendung ertüchtigt werden soll, bei herkömmlicher Herstellungsweise von Ziegeln Probleme auftreten. Dies liegt daran, dass Dachziegel typisch aus Ton in erdfeuchter Konsistenz unter Einsatz hoher Drücken in Form gebracht und dann in einem Ofen bei Sintertemperaturen gebrannt werden, um eine Keramik hoher Festigkeit und Dichtigkeit herzustellen. Wenn Kunststoff-Wärmetauscher bzw. Photovoltaik-Module in einen Ziegelrohling integriert werden sollen, ist dies nicht möglich.

Es ist daher bereits vorgeschlagen worden, als Grundmaterial für derartige Außenflächen-Gebäudeelemente Beton zu verwenden. Ein Beispiel für Dachziegel, bei denen Wärmetauscher in einen aus Betonmaterial gebildeten Grundkörper eingebettet wurden und die auf der Außenseite mit photovoltaischen Elementen versehen sind, wurde zu Forschungszwecken auf der Margarethenhöhe in Essen verbaut. Die mit diesen Elementen gewonnene thermische Energie wurde zur Regeneration, d.h. Wiedererwärmung des Erdreiches um die Erdwärmesonden herum, verwendet. Verwiesen sei diesbezüglich auf die Veröffentlichung "Praxistest für die Denkmalpflege - Solardachsteine" von H. Garrecht et al. in "Schützen und Erhalten - mit Sachverstand und Handwerkskunst", 31. hanseatische Sanierungstage, Lübeck 2021. Dort wird ein solarhybrider Dachstein aus Feinkornbeton beschrieben, in dessen Körper ein großer Fluidwärmetauscher eingegossen ist, der aus der Ziegelunterseite herausstehende Anschlussstutzen aufweist. Dieser Fluidwärmetauscher wird als polymerbasierte Twin-Channel-Komponente zur Wärmeträgerführung beschrieben; von alternativen Versuchen mit Kupferrohren als Wärmetauscher wird berichtet, dass die Kosten zu hoch gewesen seien. Auf der Oberseite des bekannten Ziegels ist ein als CIGS-Dünnschichtmodul gebildetes Photovoltaik-Laminat angeordnet. Das CIGS-Dünnschichtmodul gebildetes Photovoltaik-Laminat wird dazu bei der Herstellung des Dachziegels an einer Schalungsoberfläche fixiert und dann mit eingegossen. Das in der Veröffentlichung gezeigte Außenflächen- Gebäudeelement ist der Form herkömmlicher Ziegel angepasst.

Die auf der Margarethenhöhe in Essen in einem Forschungsprojekt verbauten Außenflächen-Gebäudeelemente konnten so bereits photovoltaische und solarthermische Funktionalitäten vereinen. Während bei den in Essen verbauten Dachsteinen schon aufgrund der Verwendung in einem hochrangige Denkmäler betreffenden Forschungsprojekt vergleichsweise hohe Preise für die Außenflächen-Gebäudeelemente akzeptabel waren, gilt dies nicht ohne weiteres auch bei anderen Anwendungen. Problematisch ist an den bekannten Außenflächen-Gebäudeelementen unter anderem, dass ihre Konstruktion noch keine preiswerte Serienfertigung ermöglicht. So wurde im Stand der Technik vorgeschlagen, die PV-Laminate lediglich mit doppelseitigem Klebeband an der Kunststoffschalung zu fixieren, was insbesondere bei PV-Laminaten zu Problemen führt, da diese entsprechend einer gewellten Dachsteingeometrie in eine gekrümmte Form zu bringen sind; dabei kommt es in bisherigen Versuchen, Thermie und Photovoltaik in einem gewellten Dachsystem zu kombinieren, zu Ablösungen der PV-Laminate vor dem eigentlichen Vergießen mit den sehr gut fließfähigen Hochleistungsfeinkornbetonen. Die bislang mit doppelseitigen Klebebändern an der Schalung durchgehend an den Modulrändern zu fixierenden PV-Laminate lassen sich trotz dieser aufwändigen Befestigung nach dem Stand der Technik beim Entschalen nur bedingt schadenfrei von der Schalung trennen. Deswegen muss zum Schutz der monokristallinen PV-Zellen gefertigten Module, die sich durch eine extreme Sprödigkeit auszeichnen und bei kleinster Biegebeanspruchung zu Bruch gehen und damit in ihrer elektrischen Wirkung ausfallen, eine vorsichtige Freilegung der PV-Laminatoberfläche erfolgen. Hierzu müssen bislang die PV-Laminatoberflächen mit kleinen Meißeln und Spachteln mit auf die Problemsituation abgewandelten "bergmännischen Freilegungsmethoden" die zwischen Laminatoberfläche und Schalung eingetretenen und erhärteten Feinkornbetone entfernt werden. Treffen die eingesetzten Werkzeuge auf die Schutzfolien der PV-Laminate werden diese geschädigt, so dass die Dauerhaftigkeit der PV-Laminate gefährdet ist. Es ist einsichtig, dass eine solche Vorgehensweise einer Automatisierung der industriellen Fertigung der Außenflächen-Gebäudeelemente entgegensteht.

Es ist wünschenswert, eine preiswertere Ausgestaltung von Außenflächen-Gebäudeelemente zu ermöglichen, die für Photovoltaik-Thermie-Anwendungen ertüchtigt sind.

Es wird dabei einzuschätzen sein, dass der Bedarf nach einer kombinierten Thermie-Photovoltaik-Anordnung dann besonders groß ist, wenn die Gesamtkosten gering bleiben. Die Gesamtkosten für den Besitzer umfassen dabei z.B. die Kosten der Bauelemente, die Kosten der Installation, die Kosten des Betriebs und die Kosten einer gegebenenfalls erforderlichen Wartung. Bei der Betrachtung der Installationskosten ist überdies zu beachten, dass besonders schwere Bauelemente gegebenenfalls eine statische Ertüchtigung eines Gebäudes erfordern. Bei Dacheindeckungen kann dies Verstärkungen des Dachstuhles erfordern, bei der Verwendung der Außenflächen-Gebäudeelemente als Fassadenelemente sind die Gewichte insgesamt statisch zu berücksichtigen, sodass auch hier geringe Gewichte statische Vorteile bieten. Hinzu kommt, dass leichte Elemente größer ausgelegt werden können, ohne beim Verbauen Spezialmaschinen zu erfordern.

Auch ist zu beachten, dass Vorteile erhalten werden, wenn bei beabsichtigter Kühlung der Photovoltaikelemente durch die Wärmetauscher ein Wärmeübergang erleichtert ist, was bei vergleichsweise dünnen Schichten eher der Fall ist. Dies hat jedoch womöglich zur Folge, dass die Beständigkeit der Au-βenflächen-Gebäudeelemente nur gering ist.

Die Akzeptanz einer Thermie-Photovoltaik-Anordnung wird zudem steigen, wenn sie über einen möglichst langen Zeitraum im Jahr verwendbar ist. Während photovoltaische Energiegewinnung ungeachtet der im Winter schwächeren Sonneneinstrahlung immer noch wenigstens stundenweise möglich ist, kann die unmittelbare Verwendung des durch Sonneneinstrahlung auf die Dachsteine aufgeheizten Fluids bereits an kalten Tagen im Herbst oder Frühjahr unzureichend sein und im Winter sogar über einen längeren Zeitraum unmöglich werden. Damit entfällt die unmittelbare Nutzung gerade in den Perioden, in denen typisch geheizt wird.

Es ist daher bereits vorgeschlagen worden, Wärmepumpen mit ins Erdreich eingebrachten Wärmetauschern, sog. Geothermiesonden zu betreiben. Da dies auf Dauer zu einer Abkühlung des Erdreiches und somit zu einer Verschlechterung des Wirkungsgrades führt, ist weiter bereits vorgeschlagen worden, Energie aus Solarthermieanlagen einzusetzen, um das Erdreich um die dort eingebrachten Wärmetauscher herum zu erwärmen bzw. auf einer anfänglichen Temperatur zu halten. Damit kann Wärme während Phasen starker Sonneneinstrahlung gespeichert werden. In der Heizperiode kann mit dem Einsatz von Wärmepumpen diese auf einen jährlich wiederkehrenden durchgeladenen Wärmespeicher, dem im Sommer nachgeladenen Erdreich, zugegriffen werden. Die Arbeitszahl der Wärmepumpe kann daher mit Werten deutlich über 5 angesetzt werden und fällt bis zum Ende der Heizperiode schlechtestenfalls auf einen Wert von 3,5 bis 4 ab. Anstelle einer Erderwärmung kommt im Übrigen auch die Erwärmung von Körpern großer Wärmekapazität während der warmen Jahreszeiten in Frage, damit aus den Körpern großer Wärmekapazität dann im Winter und evtl. in der Übergangszeit Wärme abgerufen werden kann. Bei hinreichend großer Wärmekapazität, wie sie etwa bei Betondecken, gegossenen Kellern usw. gegeben ist, kann sich die Verwendung von Wärmepumpen erübrigen. Auch bei solchen Körpern darf die Temperatur bestimmte Werte aber typisch nicht überschreiten. Es sei im Übrigen erwähnt, dass für die Außenflächen-Gebäudeelemente infolge ihrer geringen Dicke eine eher niedrige Wärmekapazität realisiert werden kann. Doch bietet diese Besonderheit die Möglichkeit, selbst kleine Wärmemengen, etwa während kurzer Warmphasen, schneller und effizienter aufnehmen zu können

Die mit einem Wärmetauscher ausgestatteten Außenflächen-Gebäudeelemente können bei Aufheizung solcher Körper somit auch im Winter und in der Übergangszeit für eine Verringerung des fossilen Wärmebedarfs sorgen. Selbst bei lang anhaltenden Kälteperioden von einem Monat oder mehr und etwa schneebedecktem Dach kann durch geeignete Wärmespeicher noch eine Nutzung der Anordnung ohne Bedarf des Zuheizens erzielt werden.

Es gibt jedoch Situationen, in denen ein Wärmeeintrag in massive Körper oder das Erdreich nicht möglich oder auch nicht erwünscht ist. So ist das Verlegen von Erdwärmesonden teuer und kann zu erheblichen Problemen führen, wenn geologische Besonderheiten nicht beachtet werden, wie das Beispiel der Stadt Staufen im Breisgau zeigt. Auch in Bergbaugebieten sind i.A. der Einbau von Erdwärmesonden untersagt. Zudem kann die Erwärmung von größeren, beispielsweise aus Beton gegossenen Körpern wie Geschossdecken oder Kellern unerwünscht sein; dies gilt insbesondere für Wohngebäude, wobei mit zunehmend heißeren Sommern eher kühle Räume gewünscht werden, wohingegen der Wärmeeintrag zu einer nicht gewünschten Temperaturerhöhung führen kann.

Es ist daher wünschenswert, gegebenenfalls auch ohne Erdwärmesonden und ohne besondere Erwärmung von Gebäudeteilen großer Wärmekapazität eine jahreszeitlich längere Nutzung auch der thermischen Komponenten einer Thermie-Photovoltaik-Anordnung zu ermöglichen. Wünschenswert ist auch, dafür besonders geeignete Außenflächen-Gebäudeelemente preiswert bereitstellen zu können.

Das Erfordernis, Bauelemente zu geringen Kosten anbieten zu können, bedingt dabei, dass die Herstellungskosten akzeptabel sein sollen, was insbesondere erfordert, dass eine Massenfertigung möglich sein soll.

Es ist wünschenswert, zumindest einige der oben genannten Probleme zumindest partiell lösen zu können.

Die Aufgabe der vorliegenden Erfindung besteht darin, Neues für die gewerbliche Anwendung bereitzustellen.

Die Lösung dieser Aufgabe wird in unabhängiger Form beansprucht. Bevorzugte Ausführungsformen finden sich in den Unteransprüchen.

Gemäß einem ersten Aspekt der vorliegenden Offenbarung wird somit ein Außenflächen-Gebäudeelement mit einem Gussmaterialgrundkörper, zumindest einem Fluidwärmetauscher und einer Photovoltaikanordnung vorgeschlagen, wobei der Gussmaterialgrundkörper aus Beton bzw. Mörtel gebildet ist, der zumindest einen Fluidwärmetauscher und eine im Gussmaterialgrundkörper eingegossene Fluidführung umfasst und der Fluidwärmetauscher relativ zur Photovoltaikanordnung durch ein in dem Gussmaterialgrundkörper eingegossenes Positioniermittel fixiert ist (d.h. bei der Herstellung fixiert war- bei erhärtetem Gusskörpermaterial fixiert einsichtiger Weise auch dieses).

Gemäß dem ersten Aspekt ist zunächst der Grundkörper der Außenflächen-Gebäudeelemente aus Beton bzw. Mörtel gebildet. Als Beton wird vorliegend ein Stoff verstanden, der aus einem vorzugsweise mineralischen Bindemittelgemisch (klinkerarme Zemente und sonstige alternative mineralische Bindemittel wie Geopolymere, Celitement etc.), Gesteinskörnung, Wasser und zur Optimierung der Frisch- und Festbetoneigenschaften mit evtl.weiteren Betonzusatzstoffen und Betonzusatzmitteln hergestellt wird.

Prinzipiell sei zu Beton bzw. Mörtel festgehalten, dass er als Grundkörpergussmaterial nicht nur preiswert verfügbar ist, sondern in seinen Eigenschaften auch sehr gut auf die Anforderungen der Au-βenflächen-Gebäudelemente eingestellt werden kann. Zudem kann, was bevorzugt ist, ein Gemisch für den Beton bzw. Mörtel gewählt werden, das sich insgesamt als nachhaltig erweist, indem durch geeignete Sekundärrohstoffe in Form von Betonzusatzstoffen der Gehalt an klinkerreichen Zementen minimiert bzw. sehr gering gehalten wird. Der Beton bzw. Mörtel kann dabei sogar letztlich recyclierbar sein. So kann berücksichtigt werden, dass Außenflächen-Gebäudeelemente oftmals simultan einer Vielzahl sich per se widersprechender Anforderungen genügen müssen. Für viele Außenflächen-Gebäudeelemente besteht die Erwartung, dass diese sehr langlebig sein sollen; wenn Außenflächen-Gebäudeelemente ausgetauscht werden müssen, entstehen nämlich in der Regel hohe Kosten, und zwar bereits dann, wenn nur einzelne Elemente ersetzt werden müssen. Es sollte also durchgehend eine hinreichend langfristig hohe Beständigkeit gegeben sein, und zwar gegenüber allen relevanten Einflüssen.

Dies gilt zunächst beispielsweise gegenüber sich zum Teil sehr schnell ändernden Temperaturen. Zu erwähnen sind etwa die ganz erheblichen Abkühlgeschwindigkeiten aufgrund sommerlicher Hagelschauerereignisse nach zuvor intensiver Sonneneinstrahlung. Hier kann innerhalb von Minuten ein Temperatursturz von 70 °C oder mehr auftreten, was zu einer ganz erheblichen Beanspruchung führen kann. Bei Fassadenelementen, insbesondere großflächigen Fassadenelementen, kann auch das Lastwechselverhalten bei Wind relevant werden.

Bei dem Beton bzw. Mörtel kann es sich um Feinbeton bzw. Feinkornbetonmörtel handeln. Darunter wird vorliegend ein Stoff verstanden, für dessen Herstellung ebenfalls vorzugsweise mineralische Bindemittel, Gesteinskörnung, Wasser sowie gegebenenfalls Betonzusatzstoffe bzw. Betonzusatzmittel verwendet werden, bei welchen aber die Gesteinskörnung nur eine maximale Korngröße von 4 mm aufweist. Bevorzugt werden in den Außenflächen-Gebäudeelementen Feinkornbetongemische zum Einsatz gebracht.

Was solche Feinkornbetongemische angeht, so sei darauf hingewiesen, dass die Packungsdichte von Schüttgütern wie Gesteinskörnungen, Zemente, Zusatzstoffe durch die Zugabe eines feineren Stoffes erhöht werden kann, mit denen Hohlräume gröberer Partikel ausgefüllt werden. Dieses Prinzip wird in der Betontechnologie bei gröberen Gesteinskörnungen seit langem beachtet und genutzt, indem durch möglichst weitgestufte Sieblinienverläufe eine genügende Menge an feineren Partikeln zur Füllung des gröberen Korngerüsts angeboten werden. Deshalb werden (auch) feine Körnungen (mit)verwendet. Dies verringert Hohlräume im Beton und trägt so zu einer hier erwünscht guten Wärmeleitung von der Außenfläche nach innen bei. Zu beachten ist zudem, dass sich auf die Packungsdichte eine sogenannte Teilchenbehinderung auswirken kann, die sich einstellt, sobald feine Partikel nicht mehr in die Zwischenräume der gröberen Gesteinskörner hineinkommen können. Dies ist insbesondere an Schalungswänden der Fall, was zu besonderen Wandeffekten führt. Dabei können sich feine Mischungsbestandteile wie Zemente, feine Gesteinskörner < 0,25 mm sowie Betonzusatzstoffe nicht optimal an der Schalung und damit der oberflächennahen Bereichen anordnen. Dies kann die Oberflächenrauigkeit des Außenflächen-Gebäudeelementes erhöhen, was erwünscht ist. Eine erhöhte Oberflächenrauigkeit führt nämlich schon bei niedrigeren Anströmgeschwindigkeiten von Winden zu einer turbulenten Überströmung, was gegebenenfalls zu einem intensiveren Kontakt von feuchter Luft mit der Außenflächen-Gebäudeelement-Oberfläche führt und somit eine bessere Nutzung von Taubildungswärme ermöglicht, was - wie noch erläutert wird- erwünscht sein kann.

Außenflächen-Gebäudeelemente sind zudem langfristig der Witterung ausgesetzt, was in den meisten Fällen insbesondere eine hohe Frostsicherheit erforderlich macht; dies geht mit der Forderung einher, das Eindringen von Wasser auch oberflächlich zu vermeiden. Darüber hinaus ist es aus ästhetischen Gründen im Regelfall erwünscht, das Außenflächen-Gebäudeelement sowohl bezüglich der Form als auch bezüglich der Farbe gut an die bei einem bestimmten Gebäude jeweils gegebenen Anforderungen anzupassen. Da sich Beton bzw. Feinkornbeton sehr gut vergießen lässt, kann die Form hervorragend einfach bestimmt werden; eine vollständige Durchfärbung mit geeigneten Pigmenten oder ein Aufbringen oberflächenseitiger Schichten geeigneter Farbe, beispielsweise von Lacken, ist bei Beton bzw. Mörtel ebenfalls hervorragend möglich.

Erwähnt sei auch, dass es möglich ist, für die Feinbetonmischungen Materialien zu verwenden wie Ölschieferabbrand, der sich nicht nur gut vermahlen lässt, sondern auch hydraulische, puzzolanische sowie latent hydraulische Reaktionspotenziale aufweist, aber deutlich langsamer als der Zementklinker reagiert, weshalb sich eine Zugabe von Ölschieferabbrand wie er unter dem Handelsnamen Dorobase von Holcim verfügbar ist, positiv auf die Hydratationswärmeentwicklung im Sinne einer Vermeidung von unerwünschten Gefügespannungen und Rissbildungen auswirkt. Zudem stellt sich mit der zeitversetzt nach der Hydratation der C3S-Klinkerphasen einsetzenden hydraulischen Reaktion des Ölschieferabbrands eine Erhöhung der Dichtheit des Gefüges ein. Es wird daher einzuschätzen sein, dass die Verwendung von Ölschieferabbrand für den bevorzugten Feinkornbeton bevorzugt ist.

Im Regelfall kann die Stabilität von Bauelementen durch eine entsprechend massive Auslegung erhöht werden; genau dies ist aber wiederum unerwünscht, weil dies bei der Auslegung der Gebäudestatik berücksichtigt werden muss; bei Neubauten führt eine zu massive Auslegung zu erheblichen Mehrkosten; bei Bestandsgebäuden muss von der Verwendung zu schwerer Elemente oftmals aus statischen Gründen vollständig abgesehen werden.

Die Erfindung belässt es daher nicht dabei, für das Gussmaterial Beton bzw. Feinkornbeton zu verwenden. Dieses ist als Material für Außenflächen-Gebäudeelemente auch bereits gut bekannt. Die Erfindung hat diesbezüglich nämlich erkannt, dass durch die Verwendung von Beton bzw. Mörtel gerade dann Probleme entstehen, wenn die herzustellenden Außenflächen-Gebäudeelemente durch Integration eines Fluidwärmetauschers und einer Photovoltaikanordnung in hohem Maße multifunktional ausgebildet werden sollen, und sie gibt demgemäß auch an, wie diese Probleme gelöst werden können.

Den beschriebenen, sich widersprechenden Anforderungen kann nämlich nur partiell durch die Rezeptur alleine genügt werden, etwa indem dem Grundkörpermaterial je nach Bedarf Faserelemente beigefügt werden, mehr oder weniger Zusatzstoffe, spezielle Zusatzstoffe, Zusatzmittel usw. gewählt werden. Die Außenflächen-Gebäudeelemente müssen auch bezahlbar bleiben, was die Fertigung aufgrund der Empfindlichkeit der integrierten Bestandteile erschwert, weil der in eine Gussform einzufüllende Beton bzw. Mörtel regelmäßig eine hohe Masse mit sich bringt, die bei einem Einströmen zu einer erheblichen Verschiebung der einzubetten Elemente führen können. Dies gilt, da die Photovoltaikelemente im Regelfall an einer Wandfläche der Gussform angeordnet werden können, vor allem für den Fluidwärmetauscher. Dass auch die Photovoltaik-Module fixiert sind, sei erwähnt.

Der bei der Herstellung von Außenflächen-Gebäudeelementen herkömmlicher Bauweise einströmende Beton kann somit bei den Fluidwärmetauschern im Regelfall zu Verschiebungen, die demgemäß die Wärmeabfuhr von den Photovoltaikelementen beeinträchtigen können, und überdies dazu führen, dass kritische Abmessungen im Gebäudeelement erhöht werden müssen, damit eine noch ordnungsgemäße Einbettung gewährleistet werden kann; dies wiederum widerspricht der Notwendigkeit, die Außenflächen-Gebäudeelemente mit geringer Masse herstellen zu können und konterkariert die durch die Wahl von Beton bzw. Mörtel erhaltbaren Vorteile.

Im Gegensatz zu den sich im Stand der Technik ergebenden Problemen wird vorliegend durch die Verwendung des erfindungsgemäß mit einzugießenden Positioniermittels, mit dem der Wärmetauscher relativ zur Photovoltaikanordnung während der Fertigung fixiert wird, eine hohe Reproduzierbarkeit des Außenflächen-Gebäudeelemente-Innenaufbaus und damit eine hohe Gleichmäßigkeit der Zusatzfunktionalitäten von Element zu Element trotz schneller und somit preiswerter Fertigung erzielt, die insbesondere auch bei Verfahren möglich ist, bei denen das Gussmaterial in eine Form einströmt

Das erfindungsgemäße Positioniermittel ermöglicht daher ohne weiteres eine industrielle Fertigung, bei der eine automatisierbare Fixierung des Positionermittels am Wärmetauscher ermöglicht ist. Was dabei in einer bevorzugten Variante möglich, aber nicht zwingend ist, ist, dass das am Positioniermittel befestigte PV-Laminat mittels zweier gegenüberliegenden Klemmfederelementen so an eine (dachstein-)oberseitige Schalung gepresst wird, dass das PV-Laminat auch beim Befüllen der Schalung nicht von flüssigen Hochleistungsfeinkornbeton bzw. Mörtel hinterlaufen wird. Wenn das Außenflächen-Gebäudeelement nach dem Erhärten entschalt wird, sind dadurch dann keine aufwändigen Nacharbeiten zur Freilegung der PV-Laminate mehr erforderlich wie im Stand der Technik und auch eine Beschädigung der PV-Laminat Oberfläche kann vermieden werden. Dies sichert einen sehr geringen Ausschuss bei der industriellen Fertigung. Dass andere Mittel als die beschriebenen Klemmfederelemente verwendet werden können, sei aber erwähnt.

Das erfindungsgemäße Positioniermittel erlaubt zudem auch, den Prozess der Zusammenführung sowohl des Positionierungsmittels mit zunächst der unteren und dann im Weiteren auch mit der oberen Schalungshälfte zu automatisieren. Letztlich kann so eine robotisch geführte Herstellungsanlage realisiert werden, die alle Teilkomponenten der Betonherstellung, der Schalungsvorbereitung, des Einfüllens des selbstverdichtenden Feinkornbetons wie auch der Entschalung nach dem Erhärten in einer automatisierten Anlage ermöglicht. Das Positioniermittel in Verbindung mit dem erfindungsgemäßen Gusskörpermaterial erlaubt es auch, die Grundkörper-Materialdicken vergleichsweise gering halten. Das gilt nicht nur, aber insbesondere, wenn - wie bevorzugt- für den Einbau industrielle Fertigungsstraßen an Stelle einer händischen Fertigung treten, was eine hohe Fertigungsgeschwindigkeit und verbesserte Einbautechnologien ermöglicht, die handwerklich nicht geleistet werden können. Es wird daher insbesondere auch vermeidbar, dass Außenflächen-Gebäudeelemente überdimensioniert werden müssen.

Es wird zudem durch die gegebene hohe Reproduzierbarkeit möglich, wesentliche Teile des Fluid-Wärmetauschers besonders nahe an den Photovoltaikelementen anzuordnen. Dadurch, dass dies gelingt, ist es auch möglich, bei gleicher Gesamtdicke der Außenflächen-Gebäudeelemente Fluidwärmetauscher mit größerem Querschnitt zu verwenden. Damit verbessert sich wiederum die Nutzbarkeit der Außenflächen-Gebäudeelemente. Dies gilt insbesondere dort, wo für Photovoltaikelemente eine besonders niedrige Temperatur gehalten werden soll; durch Verwendung eines Fluid-Wärmetauschers mit besonders großem Querschnitt und damit geringem Strömungswiderstand können bei gleicher Fluid-Pumpleistung größere Wärmemengen aufgenommen werden bzw. die Ausström-Fluidtemperaturen niedriger gehalten werden. Dies ist vorteilhaft sowohl für die Photovoltaikelemente als auch dort, wo etwa Erdwärmekollektoren in Warmphasen mit erwärmtem Fluid zur Wiedererwärmung des Erdreiches durchströmt werden sollen. Zu beachten ist dabei, dass die maximale Fluid-Temperatur für die Wiedererwärmung durch Vorschriften begrenzt ist. So soll die Vorlauftemperatur bei der Regeneration des Erdreiches um Erdwärmekollektoren bzw. Erdsonden in Deutschland gemäß der am Anmeldetag geltenden Regelungen nicht über 20°C liegen. Dass auch für Kondens-Wärmetauscher Vorteile erhalten werden, sei erwähnt.

Das offenbarte Außenflächen-Gebäudeelement kann zudem besonders preiswert hergestellt werden, weil die Fluidführung gegen die beim Eingießen von Beton wirkenden Kräfte fixiert ist. Infolge entfallender Zeiten für die Nachbereitung der entschalten Außenflächen-Gebäudeelemente erlaubt der Einsatz von Positioniermitteln eine hohe Taktrate in der Produktion bei trotzdem hoher Qualität. Die Fluidführung muss zudem nicht besonders starr sein, was es zugleich erlaubt, die Wandung der Fluidführung vergleichsweise dünn zu gestalten. So kann der Wärmefluss aus dem Material in die Fluidführung verbessert werden.

Durch die Fixierung ist auch sichergestellt, dass insbesondere in Richtung auf die Oberflächen des Außenflächen-Gebäudeelementes eine allenfalls minimale Bewegung der Fluidführung auftritt, sodass die darüber liegende Materialdeckschicht, mit der die Fluidführung auf Dauer geschützt wird, nicht besonders dick sein muss. So ist es bei dem Außenflächen-Gebäudeelement bevorzugt, wenn die Dicke der einhüllenden Grundkörpermasse an der dünnsten Stelle zwischen Außenfläche und Fluidführung nicht mehr als 5 mm beträgt. Dass dies aufgrund des geringeren Materialeinsatzes Kosten spart, sei erwähnt.

Der Vorteil einer nur vergleichsweise dünnen Überdeckung besteht darin, dass die Mindestdicke allenfalls noch durch Stabilitätsbetrachtungen bestimmt ist, was bei der Verwendung geeigneter Betonmischungen, etwa von Ultrahochfestbetonen (UHFB) und /oder von faserverstärktem Beton bei gleicher Fläche sehr leichte Bauteile ermöglicht, ohne dass die Gefahr von Rissen oder dergleichen besteht. Dies ist vorteilhaft, weil zum einen die statische Belastung gering gehalten werden kann und weil zum anderen die maximal von Arbeitern noch maschinenlos bewegbaren Außenflächen-Gebäudeelemente großflächiger sind, was wiederum Kostenvorteile bei der Montage bedingt. Zudem ist bei großflächigen Elementen nicht nur die Anzahl der Anschlüsse für Fluid und elektrische Leistung geringer, sondem auch die Platzierung der Anschlüsse selbst erleichtert.

Dass eine hohe Beständigkeit der Außenflächen-Gebäudeelemente trotz gegebenenfalls dünner Überdeckung möglich ist, wenn und indem die Fluidleitung besonders präzise positioniert wird, gilt zudem vor allen Dingen dort, wo durch die Positioniermittel noch zusätzlich die mechanische Stabilität erhöht wird. Dies kann insbesondere bei der Verwendung von Blechstanzteilen für die Positioniermittel gegeben sein. Alternativ zu metallenen Konstruktionselementen können für das Positioniermittel auch Elemente aus Kunststoff mit Glasfaser- oder Carbonfaserverstärkung als Aussteifungsstäbe zum Einsatz kommen.

Weil die Fixierung der Fluidführung zudem bewirkt, dass die Außenflächen-Gebäudeelemente nicht besonders dick gestaltet werden müssen, wie dies der Fall wäre, wenn die Gefahr einer erheblichen Bewegung einer eher dünnen und damit in der Regel sehr flexiblen Fluidführung während des Gießens bestünde, verringert sich zudem das Gewicht des Außenflächen-Gebäudeelementes bei gleicher Grö-βe, was es erlaubt, besonders große Elemente herzustellen, ohne dass die Gefahr besteht, dass diese nicht mehr gut von Handwerkern ohne Hilfsmittel verbaut werden können. Dort, wo Außenflächen-Gebäudeelemente noch nicht automatisiert montiert werden, wie beispielsweise bei vielen Dacheindeckungen, können daher bei gleichem Gewicht recht große Elemente verbaut werden, was eindeutig vorteilhaft ist, um die Montagekosten zu senken. Vor diesem Hintergrund ist verständlich, dass das Außenflächen-Gebäudeelement bevorzugt ein Dacheindeckungselement sein kann, das eine Fläche von mindestens 40cm*30 cm überdeckt, wobei es bevorzugt in einer ersten, Richtung eine Abmessung von mindestens 50cm, 60cm, 70cm oder 80cm aufweist und wobei die Abmessung in der zweiten Richtung quer dazu kleiner oder gleich der Abmessung in der ersten Richtung ist und zumindest 40, 50cm, 60cm beträgt.

Eine geringe erforderliche Stärke der die Fluidführung überdeckenden Schicht trägt aber auch auf andere Weise zu einer effizienteren Nutzung der Außenflächen-Gebäudeelemente bei. Zum einen sinkt nämlich die Wärmekapazität der Außenflächen-Gebäudeelemente, zum anderen verbessert sich der Wärmetransport von der Oberfläche bis zur Fluidführung. Dies erlaubt es, Wärme nicht nur während Phasen besonders intensiver Einstrahlung zu sammeln, sondern auch jene Wärme zu nutzen, die konvektiv in Form der Umweltwärme vorliegt. Zudem kann mit den Außenflächen-Gebäudeelementen die Wärme gewonnen und genutzt werden, die beim Kondensieren von Luftfeuchtigkeit unter Taubildung freigesetzt wird und als Latentwärme erhebliche Wärmeinhalte zur Nutzung bietet.

Erwähnt sei diesbezüglich, dass es für die Nutzung der beim Kondensieren von Luftfeuchtigkeit unter Taubildung freigesetzten Wärme nicht zwingend erforderlich ist, ein Außenflächen-Gebäudeelement zu verwenden, welches zugleich für die Gewinnung von photovoltaischer Energie ausgestattet ist, dass aber diese Doppelnutzung ohne weiteres möglich und vorteilhaft ist, um eine optimale Energiegewinnung zu ermöglichen. Weiter sei erwähnt, dass gegebenenfalls nicht nur die bei Taubildung freigesetzte Wärme genutzt werden kann, sondern gegebenenfalls auch die bei Gefrieren flüssigen Wassers freigesetzte Kristallisationswärme. Da dabei Temperaturen um Null Grad auftreten, erfordert dies allerdings geeignet frostgeschützte Fluide und einen geeigneten Wärmespeicher.

Erwähnt sei zudem, dass die besonders vorteilhafte Latentwärmenutzung nicht zwingend auf bestimmte Formen der Außenflächen-Gebäudeelemente oder allgemeiner von Wärmetauschern angewiesen ist, dass aber bestimmte Wärmetauscher besondere Vorteile bieten. Oben wurde bereits erwähnt, dass eine Oberflächenrauigkeit als vorteilhaft angesehen wird. Dies gilt für die Ausgestaltung des einzelnen Elementes. Vorteile können sich aber auch bei einer bevorzugten Gestaltung der Gebäude-Außenfläche per se geben, nämlich wenn die Außenflächen-Gebäudeelemente, die zu eine Gebäude-Wärmeversorgungs-Anordnung gehören, in Form bekannter Dachsteingeometrien gebildet sind, insbesondere als nichtplane Dachsteine, die in partiellem Überlapp mit anderen Ziegeln verlegt sind. Hier ergeben sich Turbulenzen bei der Überströmung eines Daches durch das überlappende, schuppenartige Verlegen. Dass dabei überdies die herkömmliche Optik gewahrt ist, sei erwähnt.

Erwähnt sei aber auch, dass der Dachstein selbst nicht zwingend rau gestaltet werden muss. Insbesondere muss der Dachstein nicht vollständig ganzflächig rau gebildet werden, vor allem nicht bei ohnehin Turbulenzen erzeugender überlappender Verlegung. Demnach ist es möglich, dass der Dachstein eine Glasabdeckung über den Photovoltaik-Elementen der Photovoltaik-Anordnung umfasst, insbesondere ein transparent bedrucktes oder auch durchgefärbtes Glaselement. Transparent meint hierbei insbesondere eine (gegebenenfalls: Teil-) Transparenz für Strahlung, die in den unter der Glasfläche liegenden Photovoltaik-Elementen nutzbar ist sowie vorzugsweise auch für Wärmestrahlung. Eine solche Bedruckung ist ohne weiteres möglich. Dass alternativ und/oder zusätzlich zur Bedruckung eine Durchfärbung möglich wäre, sei erwähnt. Zudem können die Glasabdeckungen in beliebigen Formen ausgeführt werden, um Geometrien der bekannten Dachsteine aus Ziegel und Beton zu entsprechen und um diese so mit den Außenflächen-Gebäudeelementen optisch nachzubilden. Gerade für den Einsatz in einem denkmalgeschützten Umfeld bieten derart ausgebildete Dachsysteme vielfältige Anwendungspotenziale.

Es sei erwähnt, dass das Gusskörpermaterial insbesondere faserverstärkt sein kann und/oder Textilbeton mit einer oder mehreren, typisch zwei Gewebelagen verwendbar wäre. Die Verwendung von derartigen Verstärkungen oder Einlagen ist abhängig von der genauen Auslegung der Außenflächen-Gebäudeelemente sowie davon, was für Positioniermittel eingesetzt werden. Per se muss das Positioniermittel nur ausreichend stabilisierend wirken, um den Fluidwärmetauscher bzw. die relevanten Strecken entlang derselben in der gewünschten räumlichen Lage zum Photovoltaikelement zu halten, bis der Beton eingefüllt ist und mit der Erhärtung eine ausreichende Festigkeit erreicht hat.. Vorteilhaft für die Qualität der Außenflächen-Gebäudeelemente ist zudem, dass die PV-Laminate sich nicht mehr von der Schalungsoberfläche lösen - was zur Folge hätte, dass dann der flüssige und sehr leicht fließfähige Hochleistungsfeinkornbeton einen Zutritt in den sich mit der Ablösung bildenden Zwischenraum zwischen PV-Laminat und Schalung findet und diesen füllt. Dies würde nämlich das PV-Laminat in den losgelösten und hinterfüllten Bereichen mit Beton bzw. Mörtel überdecken und das Element ergo nicht mehr für die Photovoltaik nutzbar. Abgesehen von einer optisch nicht zu akzeptierenden Beeinträchtigung der Außenfläche wäre also auch die elektrische Leistungsfähigkeit des Elements nicht mehr gegeben. Wird im Stand der Technik eine solche Betonüberdeckung abgenommen, bedarf es zudem eines sorgfältigen und behutsamen handwerklichen Arbeitens, das äußerst aufwändig ist. Nicht zuletzt wird mit den im Stand der Technik dabei zur Anwendung zu bringenden bergmännischen Freilegungsarbeiten eine Schädigung der PV-Laminatoberfläche trotz aller Vorsicht nicht auszuschließen sein. Die Erfindung kann diese Nachteile verhindern.

Was die ausreichende Festigkeit angeht, so ist anzumerken, dass das noch nicht ausgehärtete Gussmaterial im Regelfall eine so hohe Viskosität besitzt, dass sich der Fluidwärmetauscher - abgesehen von möglichen Aufschwimm-Effekten - wenig bis gar nicht bewegen wird. Ein Aufschwimmen kann insbesondere reduziert werden, indem der Fluidwärmetauscher beim Vergießen nicht leer, sondern fluidgefüllt ist, insbesondere mit Wasser- dies kann gegebenenfalls auch, vor allem bei Verschluss des Wärmetauschers während des Vergießens zur Stabilisierung beitragen, was dünnere Wände erlaubt. Alternativ kann er nach unten in die Form gepresst werden, bzw., wenn Teile des Fluidwärmetauschers oder der Positioniermittel aus dem Gusskörper heraus ragen, wie beispielsweise Befestigungselementen, Hebelaschen oder dergl., an den unteren Schalungsteil herangezogen werden.

Erwähnt sei, dass die Verwendung der Positioniermittel auch insoweit vorteilhaft ist, als die Fluid-Wärmetauscher selbst weder besonders schwer noch besonders zur Aufnahme von Lasten geeignet sein müssen. Es ist somit nicht erforderlich, metallische Fluid-Wärmetauscherrohre oder andere metallische Fluidwärmetauscheranordnungen zu verwenden, geschweige denn besonders massive metallische Fluid-Wärmetauscher.

In einer bevorzugten Variante ist bei dem Außenflächen-Gebäudeelement die Fluidführung vielmehr nichtmetallisch oder überwiegend nichtmetallisch, und insbesondere aus Kunststoff gebildet. Durch die Verwendung geeigneter Positioniermittel muss also die Stabilität der Fluidführung selbst, beispielsweise von verwendeten Rohren, nicht besonders hoch sein und insbesondere ist es nicht erforderlich, metallische Rohre in eine geeignete, typisch Schlangen-Form zu biegen. Dass bei einer bevorzugten Ausführungsform die Fluidführung nur partiell nichtmetallisch sein soll, ist dem Umstand geschuldet, dass bestimmte Verbundrohre wie Aluminiumverbundrohre besonders vorteilhaft sind, weil sie für besonders hohe Temperaturen verwendbar sind, wohingegen andere, rein aus Kunststoff gebildete Rohre bzw. Schläuche nicht mehr die gewünschte Beständigkeit bei Temperaturen von beispielsweise über 70 °C, wie sie etwa auf Dächern oder Fassadenaußenseiten bei starker Sonneneinstrahlung auftreten, besitzen. In einer besonders bevorzugten Variante wird also bei dem Außenflächen-Gebäudeelement die Fluidführung mit einem Aluminiumverbundrohr gebildet, welches in der Rohrwand eine Aluminiumfolie umfasst.

Als Kunststoffe für Kunststoffrohre bzw. Kunststoffschläuche sind PE-X und PE-RT besonders bevorzugt. Allerdings weisen diese Kunststoffe einen deutlich höheren Wärmeausdehnungskoeffizienten auf als herkömmliche Betone und Mörtel, was je nach Verwendungszweck zu berücksichtigen ist. Welche diffusionsdichten bzw. nahezu diffusionsdichten Kunststoffe eingesetzt werden sollen, hängt aber auch von der maximalen Betriebstemperatur ab. Wo die Außenflächengebäudeelemente lediglich dazu dienen, Wärme abzuführen, um Kühlkosten zu verringern, ist die Auswahl einsichtiger Weise größer.

Erwähnt sei, dass Kunststoffrohre gegenüber Kunststoffschläuchen Stabilitätsvorteile bieten, Kunststoffschläuche jedoch im Regelfall leichter zu montieren sind. Gleichwohl ist insbesondere durch maschinelle Vorformung auch die Verwendung von Rohren problemfrei. Gerade bei AluminiumVerbundrohren besteht ein Vorteil dahingehend, dass nach dem Biegen keine oder eine allenfalls nur geringe Rückverformung erfolgt. Zudem sind Aluminiumverbundrohre auch besser an Wärmeausdehnungskoeffizienten angepasst, wie sie bei Verwendung von Beton bzw. Mörtel als Gußmaterialgrundkörper-Masse auftreten.

Sowohl für Schläuche als auch für Rohre ist es im Übrigen bevorzugt, wenn diese einstückig durch ein jeweiliges Außenflächen-Gebäudeelement durchlaufen. Diesbezüglich erwähnt sei, dass es sich sowohl bei Aluminiumverbundrohren als auch bei Kunststoffrohren um Massenprodukte handelt, die als durchgehende Rollenware preiswert verfügbar sind.

Eine für bestimmte Anwendungen bevorzugte Variante sieht zudem vor, dass dort, wo mit einem Au-βenflächen-Gebäudeelement sowohl warmes Fluid bereitgestellt werden soll als auch gegebenenfalls, Wärme abgestrahlt werden soll, was etwa bei Rechenzentren der Fall sein kann, zwei separate Fluidleitungen vorgesehen werden, was im Hinblick auf die Gebäude internen Fluidkreisläufe und / oder unterschiedliche Fluide vorteilhaft sein kann.

Obwohl es möglich ist, der Gusskörper-Grundmasse, d.h. dem Mörtel oder Beton, verstärkende Fasern zuzusetzen, beispielsweise Textil-Fasern, ist es auch möglich und zudem oftmals als vorteilhaft bevorzugt, die Außenflächen-Gebäudeelemente ausschließlich oder primär durch das Positioniermittel zu stärken bzw. zu bewehren.

In einem solchen Fall werden als Positioniermittel bevorzugt Stanzteile aus Blech oder auch geeignete textile 3D-Gewebe eingesetzt. Herkömmliche Bleche aus Messing, Stahl oder dergleichen sind hinreichend beständig gegen den chemischen Einfluss der Körper-Grundmassenbeton oder Mörtel.

Die Verwendung dünner Positionier-Bleche als Positioniermittel ist insofern möglich, als die Photovoltaikelemente, die an der Oberfläche des Außenflächen-Gebäudeelementes angeordnet werden müssen, typisch in der Gußform an einer geeigneten Stelle gehalten werden und dann für die Fluidleitungen eine gewisse Beweglichkeit bei Einwirken der durch das Eingießen des Betons oder Mörtels wirkenden Kräfte vorteilhaft ist. Dies verhindert nämlich, dass übermäßige Kräfte auf die Form aufgebracht werden und gegebenenfalls die Photovoltaikelemente von der Oberfläche, wo sie zusätzlich befestigt sein können, losgerissen werden. Die typisch geringe Bewegung, die durch federnde Positioniermittel zugelassen wird, wird dabei allgemein nicht zu einer kritischen Bewegung der Fluidleiter führen, insbesondere dort nicht, wo diese durchgängig sind. Zudem können die Fluidleitungen sich gegebenenfalls noch in ihre beabsichtigte Sollposition zurückbewegen, bevor die Grundkörpermasse vollständig ausgehärtet ist.

Vor diesem Hintergrund ist eine Metalldicke zwischen 0,4 mm bis 3 mm für aus Blechen, die insbesondere im Nachgang verzinkt werden oder aus Edelstahlblechen gestanzte Positioniermittel besonders bevorzugt. Die Dicke wird dabei auch von der Größe des Außenflächen-Gebäudeelementes abhängen, wobei einsichtig ist, dass kleinflächige Außenflächen-Gebäudeelemente geringere Blechdicken erfordern, wohingegen großflächigere Außenflächen-Gebäudeelemente durch dickere Bleche zusätzlich in vorteilhafter Weise bewehrt und stabilisiert werden.

Das Positioniermittel kann einstückig sein. Dies erleichtert gegebenenfalls das Einsetzen vorgefertigter Einsätze in die Form; alternativ können, insbesondere bei Verwendung von sehr langen durchgehenden Rohren für die Fluidführung, eine Vielzahl einzelner Positionier-Teile das Positioniermittel gemeinsam bilden. In einem solchen Fall ist es möglich und bevorzugt, wenn die einzelnen Komponenten des Positioniermittels so ausgesteift sind, dass die Photovoltaikelemente trotz der Mehrteiligkeit mit nur sehr geringer Beweglichkeit und damit extrem reproduzierbar in der Gussform gehalten werden, wodurch auch für das Zusammenführen der beiden Schalungshälften in Anbetracht der Fixierung des Positioniermittels am Wärmetauscher eine aufwändige Verklebung etc. nicht mehr erforderlich ist. So können beispielsweise bei einem flachen Dachstein, der als Außenflächen-Gebäudeelement die thermischen und solarelektrischen Energien, die an der Gebäudehüllfläche anfallen, aufnehmen und der Nutzung zuführen soll, die Arbeiten zum Zusammenbau der Schalungen vereinfacht werden, um so eine industrielle Fertigung der hybriden Dachsysteme zu ermöglichen.

Von Vorteil ist, wenn die PV-Laminate mittels einer aussteifenden Stützstruktur beim Zusammenführen der Schalungshälfte zuverlässig und dicht an die Schalungsoberfläche angepresst werden, um die Ausbildung eines Hohlraums zu vermeiden, weil sich dieser mit dem flüssigen Feinkornbetongemisch füllen würde- nach der Erhärtung käme es dann zu den bereits aufgezeigten Problemen. Um einen hinreichenden Anpressdruck sicherzustellen, können auf dem Wärmetauscher Fixierungspunkte für die Ankopplung des Positioniermittels an diesem Wärmetauscher vorgesehen werden. Mit einer geeigneten Ankopplung können z.B. Klemmfedern verwendet werden, deren eine Enden entsprechend fixiert werden und deren andere Enden an unterseitig einer Stützkonstruktion der Positioniereinrichtung anzuordnenden Halterungen befestigt werden. In einem solchen Zustand brauchen die Klemmfedern, je zwei gegenüberliegend an beiden Enden der Wärmetauscher, noch nicht gespannt sein. Erst mit dem Auflegen und dem Andrücken der oberen Schalung auf die untere Schalung werden die Klemmfedern der Positioniereinrichtung aktiviert und so das PV-Laminat an die obere Schalung gedrückt. Das Positioniermittel wird also, was bevorzugt ist, zwischen PV-Laminat und Wärmetauscher angeordnet sein, insbesondere in an mindestens einem von PV-Laminat und Wärmetauscher verankerter bzw. fixierter Weise, bevorzugt in jeweils an beiden verankerter bzw. fixierter Weise. Dass gegebenenfalls ein reiner Kraftschluss ausreicht, statt einen Formschluss vorzusehen, sei erwähnt. Durch das Positioniermittel werden PV-Laminat und Wärmetauscher so besonders gut relativ zueinander positioniert bzw. fixiert.

Es ist einsichtig, dass die Positionierung anzupassen ist, wenn das jeweils herzustellende Außenflächen-Gebäudeelement eine besondere Geometrie besitzt. Dies ist aber leicht möglich. So kann der Aufbau der Stützstruktur, das als Teil des Positioniermittels aufgefasst werden kann, mit z.B. drei auf den Langseiten des PV-Laminats angeordneten Stäben erfolgen. Grundsätzlich ist es zudem bevorzugt, wenn an allen Rändern des PV-Laminates eine umlaufende Aussteifung angeordnet wird, die als stützende Unterkonstruktion aus dünnen miteinander fixierten Stäben wirkt.

Da zum dauerhaften Verbund der PV-Laminate mit dem erhärteten Hochleistungsfeinkornbeton die Laminatrückseite eine Haftbrücke mittels eines geeigneten Klebers in Form der Absandung mit groben abgesiebten Sandkörnern erfolgen sollte, wäre es vorteilhaft, wenn die Positioniereinheit in gleichem Zug am PV-Laminat fixiert würde.

Ist die Haftbrücke und Beschichtung erhärtet, kann das Laminat mit verbundener Positionierung direkt in den Schalungen eingesetzt und verbaut werden.

Wie zuvor erwähnt, erlaubt es das erfindungsgemäß verwendete Positioniermittel, die erfindungsgemäßen Außenflächen-Gebäudeelemente präzise und reproduzierbar zu fertigen und trägt insbesondere dazu bei, dass die Sicherheitsreserve, um ein ausreichendes Umfassen der Fluidführung in der einhüllenden Grundkörpermasse zu gewährleisten, gering ausfallen kann. Es ist daher möglich und auch bevorzugt, wenn die Dicke der einhüllenden Grundkörpermasse an der dünnsten Stelle und/oder im Mittel zwischen Grundkörpermasse-Grenzfläche, insbesondere innenliegender Grenzfläche und grenzflächiger Seite der Fluidführung bevorzugt nicht mehr als 5mm beträgt. Mit anderen Worten muss eine besonders dicke Ausführung nicht großflächig und durchgehend gewährleistet sein.

Erwähnt sei im Übrigen, dass zwar gegebenenfalls zum Gebäudeinneren hin die Fluidführungsleitungen auch partiell unbedeckt sein könnten, dass dies aber die Gefahr der Beschädigung der Fluidleitungen nach sich zieht. Erwähnt sei weiter, dass bei im wesentlichen vollständiger Bedeckung einleuchtender Weise Anschlüsse für Fluid und elektrische Leistung nach außen geführt sein werden.

Es ist sogar möglich, gegebenenfalls eine Gestaltung so vorzunehmen, dass ein großflächiges Bauelement aussieht wie eine Vielzahl nebeneinander gesetzter, kleinflächiger Bauelemente. Dies ist besonders dort vorteilhaft, wo an Randbereichen mit herkömmlichen, kleinflächigen Bauelementen abgeschlossen werden kann.

Erwähnt sei, dass die Positioniermittel erfindungsgemäß zwar den Wärmetauscher relativ zur Photovoltaikanordnung fixiert, per se wäre dies bereits z.B. dann gegeben, wenn die Photovoltaikanordnung an einer Gussform in bekannter Lage fixiert ist und dann die Positioniermittel dazu verwendet werden, die Fluidleitungen des Wärmetauschers ebenfalls in fester Relation zur Gussform anzuordnen. Besonders bevorzugt ist aber, wenn die Photovoltaikanordnung und die Fluidleitungen gemeinsam am Positioniermittel angeordnet werden und dann mit diesem in die Gussform eingebracht werden. Dabei kann eine Anordnung der Positionierung für einen flachen Dachstein derart gebildet sein, dass das vorzufertigende Positionierelement am Wärmetauscher fixiert wird, was die Positionierung wiederum an der unteren Schalungshälfte fixiert. Danach kann dann die Schalung der oberseitigen Dachsteingeometrie auf das Positionierelement aufgelegt und angepresst werden. Dabei wird das PV-Laminat an die obere Schalung angepresst und sollte dicht an der oberen Schalung anliegen. Auf diese Weise kann eine Hinterlaufen des flüssigen Betons unterbunden werden. Dank der Federwirkung der aktivierten Klemmfedern wird das Laminat auch bis zur Erhärtung des Betons an die obere Schalung angepresst.

Wird das Außenflächen-Gebäudeelement nach der Erhärtung des Betons entschalt, lässt sich die obere Schalung direkt entfernen, da der Einsatz der bislang eingesetzten doppelseitigen Klebebänder entfällt. Eine weitere zeitaufwändige Nachbearbeitung der dachsichtigen Oberflächen ist dabei nicht mehr erforderlich.

Die Verwendung hinreichend formstabiler Positioniermittel ist eindeutig vorteilhaft, da dann die Positioniermittel vom Platz der Vormontage in die Form gebracht werden müssen, ohne dass eine Deformation auftritt. Dies wiederum führt dann im fertigen Außenflächen-Gebäudeelement zu einer besonders großen Stabilitätserhöhung; die Positioniermittel können also eine Doppelfunktion sowohl für die Montage wie auch für das fertige Außenflächen-Gebäudeelement erfüllen. Es ist demnach bevorzugt, wenn bei dem Außenflächen-Gebäudeelement das Positioniermittel ein Kunststoff-Element und/oder ein Metallelement, insbesondere ein Stanzteil umfasst, das jeweils Aufnahmen für die Fluidleitungen und die Photovoltaikelemente aufweist.

Wie oben erwähnt, ist es vorteilhaft, wenn das Außenflächen-Gebäudeelement großflächig gebildet ist. Insbesondere, wenn das Außenflächen-Gebäudeelement ein Element zur Dacheindeckung ist, ist es bevorzugt, wenn die Außenfläche eine Fläche von mindestens 40cm*30 cm überdeckt, wobei es bevorzugt in einer ersten Richtung eine Abmessung von mindestens 50 cm, 60 cm 70 cm oder 80 cm aufweist und die Abmessung in der zweiten Richtung quer dazu kleiner oder gleich der Abmessung in der ersten Richtung ist und zumindest 40 cm, 50 cm oder 60cm beträgt. Mit derartigen Größen ist es ohne weiteres möglich, die Außenflächen-Gebäudeelemente an gängige, zum Teil normierte Produkte anzupassen; beispielsweise lassen sich ohne weiteres Größen erzielen, die gängigen Dachpfannen entsprechen wie der Größe der Frankfurter Pfanne mit 420 x 330 mm. Auch weitere bekannte Typen, wie die Taunus-Pfanne und die Harzer Pfanne, die beide jeweils ca. 420 mm x 330 mm groß sind oder die Doppel-S Pfanne mit 420 mm x 332 mm haben vergleichbare Größen. Die angegebene bevorzugte Mindestgröße erlaubt es demnach, auf bestehenden Dächern vorhandene Pfannen gegen die erfindungsgemäßen Elemente auszutauschen, und zwar gegebenenfalls zudem nur auf einem Bruchteil der Dachfläche, etwa auf der stärker besonnten Seite. Dabei besteht trotz der zusätzlichen Funktionalität und insbesondere der im Gebrauch partiellen Flüssigkeitsbefüllung des Fluid-Wärmetauschers nicht die Gefahr, dass die erfindungsgemäßen Außenflächen-Gebäude zu statischen Problemen führen, weil die Anordnung besonders dünn ausgeführt werden kann. Dies gilt oftmals selbst dann, wenn die Abmessung so groß ist, dass mit einem einzigen erfindungsgemäßen Außenflächen-Gebäudeelement mehrere, formgleiche Außenflächen-Gebäude ersetzt werden.

Sind die Dachsteine der bestehenden Dachfläche kleiner als die vorzugsweise gewählte Mindestgröße ausgebildet, z.B. bei der Formenvielfalt der Biberschwanzeindeckung, lassen sich nicht zuletzt aus wirtschaftlichen Gründen mehrere Biberschwänze in Gruppen zusammenführen und in Form eines Außenflächen-Gebäudeelement mit den entsprechenden Anschlussdetails so ausbilden, dass die optische Erscheinung des Biberschwanzdaches gewahrt bleibt, aber eine funktional, verlegetechnisch und wirtschaftlich größere Einheit in der bevorzugten Mindestgröße erzielt wird. Eine sonst eher problematische, aber hier dank der Erfindung leicht lösbare Herausforderung stellt dabei die oberseitige Belegung von kleineren Einheiten aus Photovoltaik-Modulen und Glasabdeckungen dar, um die untergliederte Struktur der Biberschwanzeindeckung nachzubilden.

Die großen Gestaltungsmöglichkeiten bei der Formgebung erlauben es zudem, beispielsweise die folgenden Dacheindeckungselemente als erfindungsgemäße Außenflächen-Gebäudeelement zu gestalten: Hohlziegel Flachziegel Falzziegel, unverfalzte, gewölbte Hohlziegel, Leistenziegel. Krempziegel, Mönch-Nonneziegel, Hohlpfanne, Alte Holländische Pfanne, Fränkischer Rinnenziegel, Fittichziegel; unverfalzte, ebene Flachziegel, insbesondere Biberschwanzziegel, Burgunder Biber, Biberschwanzziegel, Falzziegel, insbesondere Herzziegel, Rautenfalzziegel, Falzziegel mit Mittelsteg, Altkircher Falzziegel, Doppelmuldenfalzziegel, Reformziegel, Juraziegel, Tuile du Nord mit geradem Deckwulst, Verschiebefalzziegel, Großflächenfalzziegel, Muldenfalzdachstein, verfalzte Hohlziegel wie griechische Falzziegel, römische Falzziegel, Klosterziegel, Holländische Pfanne, Wellenfalzziegel, Hohlfalzpfanne, Flachdachpfanne, Flachkremper, Romanische Ziegel, Verschiebeziegel, Großflächenziegel, verfalzte Flachziegel wie Strangfalzziegel, Hohlstrangfalzziegel, Strangfalzziegel modern, Falzbiber, Falzplatte, Falzziegel in Rautenform, Concret Betondachstein; Villenziegel wie Schuppenziegel, Kreuzziegel, Bouletziegel, Tuile du Nord mit runderm Deckwulst, Oegstgeester Dachziegel, Schildziegel, Hollaendischer Villen-Falzziegel; Turmziegel wie Turmbiber, Türmchenbiber, Turmfalzbiber, Turmfalzziegel, Turmziegel, sonstige Ziegelmodelle, Turmziegel, sowie auch z.B. Wandbehangziegel, Mauerabdeckziegel, Pfeilerbekrönung, Stadelfensterziegel, Gitterformziegel.

Was Gebäudeflächen-Außenelemente angeht, die nicht der Dacheindeckung dienen, seien insbesondere selbsttragende Fassadenelemente, statisch tragende, vorgefertigte Fassadenelemente, vorgehängte Fassadenelemente, Balkonwandungen, Balkontrennwände und dergleichen erwähnt.

Etliche der oben genannten Formen und Bauelemente werden geschwungen bzw. gebogen sein. Erwähnt sei aber, dass insbesondere für preiswerte Neubauten Hohlziegel mit starker Biegung per se weniger bevorzugt sind, weil dafür viele kleinflächige Photovoltaikelemente zusammengestückelt werden müssen, um der erforderlichen Biegung zu folgen; gegebenenfalls werden durch die Biegungen zudem den Wirkungsgrad mindernde Verschattungseffekte auftreten; gleichwohl ist die Erfindung auch für derartige Hohlziegel mit starker Biegung besonders vorteilhaft, weil gerade die vielen kleinen Photovoltaikelemente, wie bereits ausgeführt, durch die Positioniereinheit besonders preiswert und präzise angeordnet werden können. Mit anderen Worten ergibt die vorliegende Erfindung gerade für komplizierte Formen besondere Vorteile.

Gerade bei geschwungenen Formen kann ein Positioniermittel besonders hilfreich sein, weil es so geformt werden kann, dass die Fluidführung der gekrümmten Form des Aussenflächen-Gebäudeelementes folgt und ihr zumindest weitgehend entspricht.

Es ist zu bevorzugen, wenn die Photovoltaikmodule für die Einbettung in den Gußmaterialgrundkörper auf geeignete Weise vorbereitet sind. Deswegen wird vorliegend regelmäßig von PV-Laminat gesprochen, auch wenn andere Techniken als Laminieren verwendet werden bzw. verwendbar und gemeint sind, sofern nicht anders erkennbar und insoweit auch als vom Schutz umfasst angesehen werden.

Es können beispielsweise und bevorzugt die Photovoltaikmodule mit Dünnschichtmodulen (CIGS-Zellen) gebildet sein, die rückseitig eine Kunststofffolie aufweisen, welche mit einem geeigneten Polymer beschichtet und mit gesiebtem Sand abgesandet wird, was nach Aushärtung des Polymers in einer Schalung zur Fixierung beiträgt. Bevorzugt werden infolge der aktuell noch deutlich höheren elektrischen Leistungsfähigkeit in den erfindungsgemäßen Außenflächen-Gebäudeelementen aber monokristalline Zellen eingesetzt, die, auf Kunststofffolien fixiert, mit einer Wärmebehandlung auch in gewellte Form gebracht werden können, so dass diese im formstabilen Positioniermittel für den Verguss mit Beton bzw. Mörtel fixiert werden können und sich dabei an die Schalung so anlegen, dass eine Hinterfüllung mit dem Vergussmaterial ausgeschlossen werden kann.

Bevorzugt wird die besonnte bzw. bewitterte Oberfläche der Photovoltaikelemente mit einer Glasabdeckung zum Schutz vor mechanischen Einwirkungen und direkter Bewitterung geschützt. Daher ist es vorteilhaft, wenn die PV-Laminate oberseitig nicht mit einer Kunststofffolie, sondern vielmehr mit dünnen, z.B. auf Rollen verfügbaren vorgespannten Glasfolien, die mit Laser in ihre geometrische Form zu schneiden sind, auf das PV-Modul laminiert werden. Die Glasfolie, die beispielsweise entsprechend der Patentschrift WO2016038178A1 hergestellt und geschnitten auf die kleinformatigen PV-Laminate abgestimmt geschnitten wird, kann im Vergleich zu gewellten bzw. gekrümmten PV-Laminaten, die mit Kunststofffolien abgedeckt sind, eine deutlich längere Lebensdauer und Funktionstauglichkeit der elektrisch und thermisch aktivierten Außenflächen-Gebäudeelementen führen. Die so frontseitig, also auf der Außenseite des Aussenflächen-Gebäudeelementes, vorzusehende Glasabdeckung erlaubt zudem, das Photovoltaikmodul mit einer auf die Geometrie und die Oberflächenkontur und die farbliche Erscheinung angepassten Erscheinung zu versehen. Dies ist gegenüber Kunststoffen zu bevorzugen, um eine auch für Dächer ausreichende Langlebigkeit und Funktionstauglichkeit der PV-Module zu gewährleisten. Es sei erwähnt, dass die Glasabdeckung dann mit verschiedenen Glasmaterialien herstellbar ist. Sicherheitsgläser wie Einscheiben-Sicherheitsglas (ESG) sind alternativ der noch wenig bekannten vorgespannten Glasfolien zu bevorzugen. Es sei darauf hingewiesen, dass abdeckende Gläser bedruckbar sind, was erlaubt, eine unauffällige Optik zu erzielen. Weiter sei darauf hingewiesen, dass die Gläser gekrümmt werden können, was es wiederum erlaubt, eine große Reihe unterschiedlich geformter, in der Form herkömmlichen Dachpfannen entsprechender Aussenflächen-Gebäudelemente herzustellen.

Die eigentlichen Photovoltaik-Module können dabei als Strings aus kleineren, bevorzugt monokristallinen Teilelementen hergestellt werden, die auf einem entsprechend geformten oder hinreichend flexiblen Träger angeordnet sind. Es ist somit dort, wo die Gebäudeflächen-Außenelemente mit vergleichsweise geringem Krümmungsradius gekrümmt sind, bevorzugt, wenn die Photovoltaikmodule aus einer Vielzahl gegeneinander vor Vergießen beweglicher kleiner Elemente oder Teile zusammengesetzt sind.

Derartige, gemeinsam eine größere aktive Photovoltaikfläche bildende kleinere Einzelzellen können gemeinsam durch ein Glas oder ein anderes gemeinsames transparentes Material abgedeckt und gegen Witterungseinflüsse geschützt werden. Diese Abdeckung kann vor dem Vergießen aufgebracht bzw. in einer Form eingebracht werden; die kleineren Elemente werden insoweit zu einer größeren Einheit verbunden, die gemeinsam in die Gussform eingebracht werden kann. Bei hinreichend großen Krümmungsradien der Außenflächenelemente ist es auch möglich, Dünnschichtmodule entsprechend zu biegen, ohne sie zu zerstören oder Teile davon voneinander zu trennen.

Die obenstehende Betrachtung zeigt, dass es mit dem erfindungsgemäßen Außenflächen-Gebäudeelement möglich ist, eine Vielzahl von Formen zu realisieren. Es ist demgemäß bevorzugt, wenn das Außenflächen Gebäudeelement ein Fassadenelement oder ein Dacheindeckungselement ist, insbesondere jeweils ein gekrümmtes.

Es sei darauf hingewiesen, dass ungeachtet der Vielzahl realisierbarer Formen konventionell glatte und bevorzugt auch porenfreie Oberflächen auf der Gebäude-Außenseite gewünscht sind. Glatte Oberflächen reduzieren eine unerwünschte Algenbildung; porenfreie Oberflächen erhöhen die Frostbeständigkeit, weil ein Eindringen von Wasser in Poren und das nachfolgende gefrieren eingedrungenen Wassers vermieden wird. Erwähnt sei, dass Beton- bzw. Feinkornbetonsorten, bei denen Poren vermieden werden können, für die Herstellung der thermisch und elektrisch aktivierten Außenfläche-Gebäudeelemente besonders bevorzugt sind. Erwähnt sei hier insbesondere, dass die Verwendung von selbstverdichtendem Feinkornbeton vorteilhaft ist, da dieser ohne die funktionalen Elemente im Au-βenflächen-Gebäudeelement womöglich beeinträchtigendes Rütteln, Stampfen usw. zu einem porenfreien Körper verarbeitet werden kann. Es sei aber darauf hingewiesen, dass besonders dann, wenn auch die Kondensationswärme von taubildender Luftfeuchtigkeit genutzt werden soll, eine gewisse Oberflächenrauigkeit von Vorteil sein kann, wie oben diskutiert.

In einer bevorzugten Variante werden bei dem Außenflächen-Gebäudeelement Anschlüsse für das Fluid und die Photovoltaikenergie flexibel von der Unterseite des Außenflächen-Gebäudeelementes weggeführt. Die Leitungen sind dabei bevorzugt so lang, dass die Anschlüsse problemfrei mit einer Sammelleitung und/oder mit den Anschlüssen benachbarter Außenflächen-Gebäudeelemente verbunden werden können. Dies erleichtert das Verlegen in der Fläche auf dem Dach wie auch an den Fassaden. Es sei darauf hingewiesen, dass es ohne weiteres möglich ist, die Anschlüsse beim Vergießen zu schützen. Die Anschlüsse sind nämlich in der Regel und bevorzugt als Rückseitenanschlüsse angeordnet. Werden die -von einer davor liegenden Deckschicht freien- Photovoltaik-Module unmittelbar auf der Schalung angeordnet, so können die Anschlüsse, insbesondere dank ihrer Länge, auf der gegenüberliegenden Seite, die die Rückseite eines Außenflächen-Gebäudeelementes bildet, durch eine Dichtung in der Gussform geführt werden. Die Dichtung kann dann insbesondere später als Zugentlastung dienen.

Es wird einzuschätzen sein, dass ein Außenflächen-Gebäudelement mit einem Gussmaterialgrundkörper, zumindest einem Fluidwärmetauscher und bevorzugt auch einer Photovoltaikanordnung insbesondere herstellbar ist durch ein Verfahren, bei welchem Beton bzw. Mörtel in eine Form gegossen wird, in der sich ein Positioniermittel befindet, mit welchem eine in den Gussmaterialgrundkörper einzugießende Fluidführung und - sofern vorhanden- zumindest Teile einer Photovoltaikanordnung relativ zueinander in Position gehalten sind. Es sei erwähnt, dass die Fluidführung mit der Rückseite der im Inneren des Gußkörpers liegenden Photovoltaikanordnung fest verbunden sein kann.

Erwähnt sei auch, dass bei der Fertigung eine geeignete, um den Rand der Photovoltaikelemente herum laufende Dichtung vorgesehen werden kann, die insbesondere fest mit einer Gussform verbunden ist.

Wie zuvor erwähnt, erlaubt es das erfindungsgemäß verwendete Positioniermittel, die erfindungsgemäßen Außenflächen-Gebäudeelemente präzise und reproduzierbar zu fertigen und trägt insbesondere dazu bei, dass die Sicherheitsreserve, um ein ausreichendes Umfassen der Fluidführung in der einhüllenden Grundkörpermasse zu gewährleisten, gering ausfallen kann. Es ist daher möglich und auch bevorzugt, wenn die Dicke der einhüllenden Grundkörpermasse an der dünnsten Stelle und/oder im Mittel zwischen Grundkörpermasse-Grenzfläche, insbesondere innenliegender Grenzfläche und grenzflächiger Seite der Fluidführung nicht mehr als 5 mm beträgt. Mit anderen Worten muss eine besonders dicke Ausführung nicht großflächig und durchgehend gewährleistet sein.

Erwähnt sei im Übrigen, dass zwar gegebenenfalls zum Gebäudeinneren hin die Fluidführungsleitungen auch partiell unbedeckt sein könnten, dass dies aber die Gefahr der Beschädigung der Fluidleitungen nach sich zieht. Erwähnt sei auch, dass einleuchtender Weise Anschlüsse für Fluid und elektrische Leistung nach außen geführt werden müssen und können.

Es sei erwähnt, dass das Positioniermittel bei der Ausführung des Verfahrens bevorzugt vollständig mit eingegossen wird. Es können aber ohne Probleme gegebenenfalls Teile des Positioniermittels noch aus dem Grundmassenkörper heraus stehen, beispielsweise am Positioniermittel vorgesehene und mit diesem bevorzugt einstückig gebildete Ösen für den Angriff von Hebewerkzeugen, Laschen, an denen die Außenflächen-Gebäudeelemente befestigt werden und dergleichen.

Bevorzugt wird bei der Herstellung des Verfahrens der Feinkornbeton bzw. der Mörtel lediglich in die Form gegossen, ohne dass eine zusätzliche Verdichtung durch Rütteln, Stampfen oder Glattstreichen erfolgt. Besonders bevorzugt ist daher, wenn in dem Verfahren ein selbstverdichtender Feinkornbeton bzw. Mörtel eingesetzt wird.

Erwähnt sei auch, dass eine Vorfertigung von Einsätzen mit Fluidleitungen und Photovoltaikelementen zu einer durch die Positioniermittel verbundenen Einheit bevorzugt ist. Eine solche Vorfertigung kann automatisiert bzw. teilautomatisiert werden und insbesondere von eingelernten und damit preiswerten Arbeitskräften ohne weiteres durchgeführt werden. Alternativ ist möglich, einen Teil der Montage von Elementen an dem Positioniermittel oder die vollständige Montage von Elementen daran durchzuführen, während sich das Positioniermittel bereits in der Gussform befindet. Ob dies bevorzugt ist, hängt dabei unter anderem davon ab, wie stabil das Positioniermittel ausgebildet ist, d.h. z.B., ob etwa durch das Heben in die Form mit dem Lösen von Elementen zu rechnen ist. Dabei kann einsichtiger Weise die durch die Fluidleitungsrohre vermittelte Stabilität eines vorgefertigten Einsatzes mit berücksichtigt werden. Erwähnt sei, dass demgemäß die Rohrwandlungen nicht zu dünn ausfallen sollten und überdies die lichte Weite der Rohre bzw. nichtrohrförmiger Fluidwärmetauscher hinreichend groß sein soll.

Zu berücksichtigen ist aber auch, dass zu große Rohrwandstärken erhebliche Kräfte im Außenflächen-Gebäudeelement erzeugen können, wenn sie eine vom Gussmaterial des Grundkörpers zu stark verschiedene Wärmeausdehnung besitzen. Abhängig von den verwendeten Materialien werden daher Dicken typisch zwischen 0,7 mm und 3 mm Wanddicke gewählt sowie lichte Weiten von mindestens 4 mm, bevorzugt bis zu 15 mm verwendet. Dass hier Aluminiumverbundrohre mit einer zwischen Kunststoff eingebrachten Aluminiumfolie besonders bevorzugt sind, sei erwähnt. Darauf hingewiesen wird, dass ein Aluminiumverbundrohr, was bei der Ausführung des Verfahrens von besonderem Vorteil ist, nach dem Biegen nicht zu einer Rückverformung neigt.

Schutz wird weiter für ein Verfahren zur Herstellung eines Außenflächen-Gebäudeelementes mit einem Beton- bzw. Mörtelgrundkörper, zumindest einem Fluidwärmetauscher und einer Photovoltaikanordnung beansprucht, bei welchem Beton bzw. Mörtel in eine Form gegossen wird, in der sich ein Positioniermittel befindet, mit welchem eine in den Betongrundkörper einzugießende Fluidführung und zumindest Teile einer Photovoltaikanordnung in Position gehalten sind.

Das Gebäude-Außenflächenelement kann in einer Gebäude-Wärmeversorgungs-Anordnung verwendet werden, die zumindest aufweist ein oder mehrere fluidführende Wärmegewinnungs-Elemente, insbesondere zumindest ein Außenflächen-Gebäudeelement wie vorstehend beschrieben, ein fluiddurchströmtes Wärmespeichermittel, das dazu ausgebildet ist, Wärme an das durchströmende Fluid abzugeben oder Wärme von dem durchströmenden Fluid aufzunehmen, eine Wärmepumpe, und eine Steuerung, die dazu ausgebildet ist, den Fluidfluss durch die Wärmegewinnungs-Elemente und das Wärmespeichermittel so zu steuern, dass dem Wärmespeichermittel bestmöglich Wärme entzogen oder aus den Energiegewinnungs-Elementen zugeführt werden kann, wobei die Steuerung dazu ausgebildet ist, den Fluidfluss durch einen Eisspeicher mittels der Steuerung zumindest zeitweise so zu steuern, dass Wasser im Eisspeicher zur Wärmeentnahme unter Verwendung der Wärmepumpe bis unter den Gefrierpunkt unter Nutzung der dabei frei werdenden Latentwärme abgekühlt wird und eine Wiedererwärmung des unter den Gefrierpunkt abgekühlten Wassers und damit entstandenem Eis mit dem Fluid eine Regeneration des Eisspeichers durch das Schmelzen des Eises bewirkt. Die für das Schmelzen des Eises erforderliche Latentwärme kann über die thermisch und elektrisch aktivierten Außenflächen-Gebäudeelemente durch die konvektive Aufnahme von Umweltwärme selbst während kalter Tage in der Heizperiode gewonnen werden. Die Gewinnung der auf den Außenflächen-Gebäudeelementen verfügbaren Wärme umfasst neben der konvektiv aufnehmbaren Umweltwärme auch die Gewinnung von Latentwärme, die sich im Zuge der durch das aus dem Eisspeicher den thermisch aktivierten Dachsteinen zugeführte kalte Wärmeträgerfluid einhergehende Abkühlung der Außenflächen-Gebäudeelemente aufgrund der Kondensation von in der angrenzenden Außenluft nicht mehr aufnehmbaren Wassermolekülen ausgeht. Unterschreitet die Oberflächentemperatur des Außenflächen-Gebäudeelements die Taupunkttemperatur der Umgebungsluft, kommt es zur Kondensation von Wasserdampf. Mit der Tauwasserbildung einher geht die physikalisch bedingte Freisetzung von Kondensationswärme, die zu einer Erwärmung der thermisch mittels des vom Eisspeicher kommenden Wärmeträgerfluids gekühlten Außenflächen-Gebäudeelemente führt. Die so zugeführte Latentwärme wird im Außenflächen-Gebäudeelement vom Wärmeträgerfluid aufgenommen. Das Temperaturniveau steigt demgemäß infolge der von den Außenflächen-Gebäudeelemente aufgenommenen Umweltwärme wie auch infolge der zuvor beschriebenen Kondensationswärme an. Das sich derart erwärmende Wärmeträgerfluid wird dann dem Eisspeicher zugeführt, so dass das dem Eisspeicher zugeführte Medium infolge eines Temperaturzustands oberhalb des Gefrierpunkts zur Abschmelzung des Eises im Umfeld der Wärmetauscherflächen des Eisspeichers führt. Der Eisspeicher kann somit auch während der Heizperiode mit dem Schmelzen des Eises regeneriert werden. Dem flüssigen Wasser kann nachfolgend die Wärmepumpe erneut die Latentwärme des Phasenwechsels beim Übergang des geschmolzenen Wassers zurück in die Eisphase entzogen werden. Die gleiche Latentwärme muss darauffolgend zur Regeneration des Eisspeichers in Form der konvektiven Gewinne aus der Umwelt wie auch in Form der Kondensationswärme infolge der Taupunktsunterschreitungen über die thermisch aktivierten Außenflächen-Gebäudeelemente erneut gewonnen werden. Erwähnt sei, dass für die Wärmeeinspeisung in die Speicher und für die Wärmeentnahme jeweils unterschiedliche Fluidkreisläufe vorhanden sein können, ohne vom Vorstehenden abzuweichen.

Es sei darauf hingewiesen, dass die Nutzung einer Gebäude-Wärmeversorgungsanordnung, welche die Kristallisationswärme von Wasser in einem Eisspeicher mittels einer Wärmepumpe nutzt, und welche dann eine Wiedererwärmung des Eises unter Verwendung von Außenflächen-Gebäudeelementen, die fluiddurchströmt sind, nutzt, nicht zwingend Außenflächen-Gebäudeelemente nutzen muss, die neben den Fluidführungsmitteln auch photovoltaische Module aufweisen und/oder bei denen Fluidführungsmittel durch in Gussmaterial eingegossenes Positioniermittel fixiert sind, auch wenn aus dem Vorstehenden einsichtig sein wird, dass und weshalb dies vorteilhaft ist.

Es sei aber darauf hingewiesen, dass andere Ausgestaltungen der Außenflächen-Gebäude-elemente ohne weiteres möglich sind, insbesondere auch dann, wenn Photovoltaik und Thermie gemeinsam genutzt werden sollen. So können beispielsweise hybride Außenflächen-Gebäudeelemente auch als Metalleindeckungen für Dächer gebildet werden, was besonders bei Neubauten hilfreich sein kann. Dabei kann ein Metallblech wie ein Kupferpanel an jenen Längsrändern, die auf dem Dach der Dachsteigung folgen, mit Stehfalzen versehen werden. Zwischen den Stehfalzen können dann die Fluidführungsmittel in Form einer Verrohrung angeordnet werden, wobei zusätzlich Wärmeleitmittel vorgesehen sein können, um die Wärme von der Gesamtfläche optimal zu nutzen. Die Wärmeleitebene mit der Wärmetauscherverrohrung kann durch eine insbesondere durch (transparente bzw. teiltransparente) Bedruckung farblich angepasste Glasabdeckung abgedeckt werden, die sich über die gesamte Länge des Panels in voller Breite zwischen den Stehfalzen erstreckt. Zwischen der Glasabdeckung und der Wärmeleitebene mit Wärmetauscher-Verrohrung bzw. Fluidführungsmitteln wie Schläuchen können zudem photovoltaische Elemente angeordnet werden. Diese können gegebenenfalls unmittelbar unterhalb der Glasabdeckung befestigt werden. Es kann aber auch gewünscht sein, dass die Glasplatte und das Photovoltaikmodul separat bleiben, wenn etwa eine leichte Austauschbarkeit der Glasabdeckung gewünscht ist, um bei Schadensereignissen wie Hagel hohe Kosten zu vermeiden. Als Metallblech kann z.B. Kupfer oder Aluminium oder verzinktes Blech verwendet werden. Unterhalb dieser Paneele kann eine hochdiffusionsoffene, aber schlagregendichte Membran vorgesehen werden, um eine Beschädigung der Dachkonstruktion durch an den Außenflächen-Gebäudeelementen kondensierendes Wasser zu vermeiden. Bei hinreichend starker mechanischer Ausbildung ergibt sich so zugleich eine behelfsmäßige Deckung. Es versteht sich, dass bevorzugt unter der Membran eine Dämmschicht vorgesehen werden kann, um gute Wärmedämmwerte zu erzielen.

Derartige Metallpaneele haben zwar gegebenenfalls keine Turbulenz-fördernde Rauigkeit der Oberfläche aufzuweisen, lassen aber gleichwohl hohe Wärmeerträge erwarten, weil sie - anders als Dachsteine aus Ziegel und Feinkornbeton - dank fehlenden Überlapps und fehlender wechselseitiger Verschattung - einen sehr großen Teil der Dachfläche für die Energiesammlung nutzbar machen; da sie großflächig herstellbar sind, gegebenenfalls auch auf einfachste Weise auf Maß, ist es zudem ohne weiteres möglich, sie an beliebige Dachgrößen anzupassen.

Prinzipiell erlaubt die Nutzung eines Eisspeichers, Fluid bereits dann zu nutzen, wenn es mit dem fluidführenden Außenflächen-Gebäudeelement nur auf Temperaturen wenig über dem Nullpunkt erwärmt werden kann. Dies ist sehr lange im Jahr möglich, sodass mit Wärmepumpen auch in der kalten Jahreszeit auf einen besonders effizienten Wärmespeicher, der immer wieder regeneriert werden kann, Rückgriff genommen werden kann. Besonders effizient wird dies, wenn zugleich die Kondensationswärme von taubildender Luftfeuchtigkeit genutzt werden kann. Die Kondensation von Luftfeuchtigkeit an den fluidführenden Außenflächen wird zudem durch das Durchpumpen kalten, zu erwärmenden Fluids begünstigt. Die Wärmepumpe kann aufgrund der großen Kristallisationswärme bei Abkühlung des Fluids im Eisspeicher besonders effizient betrieben werden und durch die Nutzung von Kondensationswärme kann auch der Wärmekollektor effizient betrieben werden.

Es ist einsichtig, dass in einer besonders bevorzugten Variante neben dem Eisspeicher auch ein Wärmespeicher mit höherer Temperatur vorgesehen werden kann, insbesondere für jene Zeiten, in welchen mit den Außenflächen-Gebäudeelementen Fluid auf Temperaturen oberhalb jener Temperatur, die für Heiz- und Warmwasserzwecke erforderlich ist, erwärmt werden kann. In einem solchen Fall kann insbesondere die Rücklauftemperatur des Fluids bestimmt werden, um darüber zu entscheiden, in welchen Wärmespeicher mit dem Außenflächen-Gebäudeelement gewonnene Wärme einzuspeisen ist.

Bei einer solchen Anordnung werden bevorzugt auch an wenigstens einer Stelle Temperatursensormittel vorgesehen sein. Diese können in die Gebäudeflächenelemente integriert sein, etwa um die tatsächliche Oberflächentemperatur bei Sonneneinfall und /oder Witterungsereignissen wie Schneefall bzw. Hagel genau zu erfassen. Im Regelfall wird es allerdings ausreichend sein, die Fluid-Temperatur stromabwärts des Gebäudeflächen-Außenelementes zu erfassen.

Die Außenflächen-Gebäudeelemente der vorliegenden Erfindung sind zudem insbesondere auch geeignet, Fluid für die Wiedererwärmung des Erdreiches um Geothermie-Sonden herum nach Wärmeentnahme aufzuheizen, falls solche genutzt werden. Hier ist besonders von Bedeutung, dass Vorschriften bestehen, welche die Maximaltemperaturen des zur Wiedererwärmung verwendeten Fluids festlegen. Aufgrund der durch die erfindungsgemäße Anordnung der Außenflächen-Gebäudeelemente sehr guten Reproduzierbarkeit der Fluidleiter-Positionen innerhalb der Außenflächen-Gebäudeelemente ist es möglich, Fluidleiter mit besonders großer lichter Weite zu verwenden, was wiederum eine höhere Durchströmungsgeschwindigkeit und somit niedrigere stromabwärtige Fluidtemperaturen zulässt. Auch bei Fluidleitern mit besonders großer lichter Weite kann einsichtiger Weise die Strömungsgeschwindigkeit so weit reduziert werden, dass eine starke Erwärmung bei gegebener Sonneneinstrahlung erfolgt. Demgemäß können auch besonders hohe Temperaturen, wie sie zur Brauchwassererwärmung, Heizung und dergleichen erforderlich sind, problemfrei mit Elementen der vorliegenden Erfindung erzielt werden. Die obere Grenze der Fluid-Auslasstemperatur ist dabei im Wesentlichen durch die Temperaturbeständigkeit der Fluidleiter im Außenflächen-Gebäudeelement bzw. in nachfolgenden Verrohrung usw. bestimmt; zudem muss gegebenenfalls dafür Sorge getragen werden, dass die Photovoltaikelemente auf einer ökonomisch noch vertretbare Leistungsausbeuten ergebenden Temperatur betrieben werden. Das gegebenenfalls die Temperatur unmittelbar an den Photovoltaikelementen ermittelt werden kann, sei erwähnt.

Es ist vorteilhaft, zumindest an einer oder einigen wenigen Stellen Innen- und Außentemperaturen zu erfassen. Dies erlaubt es insbesondere, festzustellen, wann abends bzw. nachts die Temperatur so weit abgefallen ist, dass Fluid ohne größeren Energieaufwand als für die Pumpe und Steuerung erforderlich aus einem Gebäudeinneren zur Abkühlung durch die Außenflächen-Gebäudeelemente geleitet werden kann. Weiter kann die Steuerung so ausgebildet sein, dass bei sehr kalten, winterlichen Außentemperaturen Fluid durch die Außenflächen-Gebäudeelemente gepumpt, dort abgekühlt und dann durch ein - bevorzugt thermisch isoliertes- Kältereservoir geführt wird, das im Sommer zur energetisch günstigen Kühlung herangezogen werden kann.

Es sei im Übrigen erwähnt, dass die Geschwindigkeit, mit der Fluid durch die Außenflächen-Gebäudeelemente gepumpt wird, um dort Wärme zu sammeln, ebenfalls von der Rückflusstemperatur und/oder der Außentemperatur respektive der Sonneneinstrahlung abhängig gemacht werden kann; so ist bei der Versorgung von (allerdings weniger bevorzugt zu verwendenden) Geothermie-Sonden mit den Boden wieder erwärmendem Fluid eine Begrenzung der Rückflusstemperatur erforderlich, was bei starker Sonneneinstrahlung ein schnelles durchströmen erfordert, wohingegen eine starke Erwärmung für einen Hochtemperatur-Wärmespeicher mit beispielsweise über 40 oder 50° einen längeren Aufenthalt von Fluid bei gegebener Sonneneinstrahlung erfordert. Ähnlich kann es sich in der kalten Jahreszeit verhalten, wo eine Erwärmung durch Kondensation von Luftfeuchtigkeit auftreten soll. Hier ist es im Übrigen ohne weiteres möglich, mit Sensoren eine Vielzahl von Parametern zu erfassen, wie beispielsweise eine aktuelle Lufttemperatur, eine aktuelle Luftfeuchtigkeit, eine Windgeschwindigkeit, eine Sonneneinstrahlung, eine Vorlauftemperatur und eine Rücklauftemperatur, um dann für diese Parameter eine optimale Durchström-Geschwindigkeit zu bestimmen. Derartige Bestimmungen können durch Modellierung und / oder basierend auf Erfahrungswerten mit einzelnen Anlagen, beispielsweise unter Nutzung von Techniken unscharfer Logik und /oder künstlicher Intelligenz erfolgen. Für die Anordnung ist somit z.B. ein dynamisches, thermisches Simulationsmodell, mit dem die Speicherauslegung und die zugehörigen Betriebsstrategien für den Fall einer normalen Wärmeversorgung und für die Sicherstellung des Betriebs bei extrem kalten Wetterbedingungen ermittelt werden kann, vorteilhaft.

Es sei im Übrigen darauf hingewiesen, dass mehr als eine Wärmepumpe vorhanden sein kann. Diese können beispielsweise kaskadiert aufgestellt und leistungs- bzw. bedarfsabhängig einzeln oder in Gruppen betrieben werden. Um eine erste Wärmepumpe für niedrigere Temperaturdifferenzen optimal auslegen zu können und damit im Betriebsoptimum zu betreiben, werden erst bei größerem Wärmebedarf für die zu überwindenden Temperaturdifferenzen weitere Wärmepumpen zugeschaltet.

Es ist einsichtig, dass eine Reduktion der Strömungsgeschwindigkeit eine Reduktion des Pumpenergieaufwandes nach sich zieht, also erwünscht ist. Es ist auch einsichtig, dass gerade dann, wenn der Wärmeeintrag in das Fluid durch die Wärmekollektoren der Außenflächen-Gebäudeelemente nur gering ist, ein gepulstes Pumpen erfolgen kann, mit dem zunächst aufzuwärmendes Fluid in die Fluidführung der Außenflächengebäudeelemente gepumpt wird, dann - während einer Pump-Pause - das in der Fluidführung der Außenflächengebäudeelemente steht, bis es hinreichend erwärmt ist, und dann das erwärmte Fluid bis zum Wärmetauscher des Speichers gepumpt wird, was vorzugsweise so schnell geschehen wird, dass das zuvor erwärmte Fluid in den zum Wärmespeicher führenden Leitungen dabei allenfalls wenig Wärme verliert.

Die Erfindung wird im Folgenden nur beispielhaft unter Bezugnahme auf die Zeichnung erläutert. In dieser ist dargestellt durch:

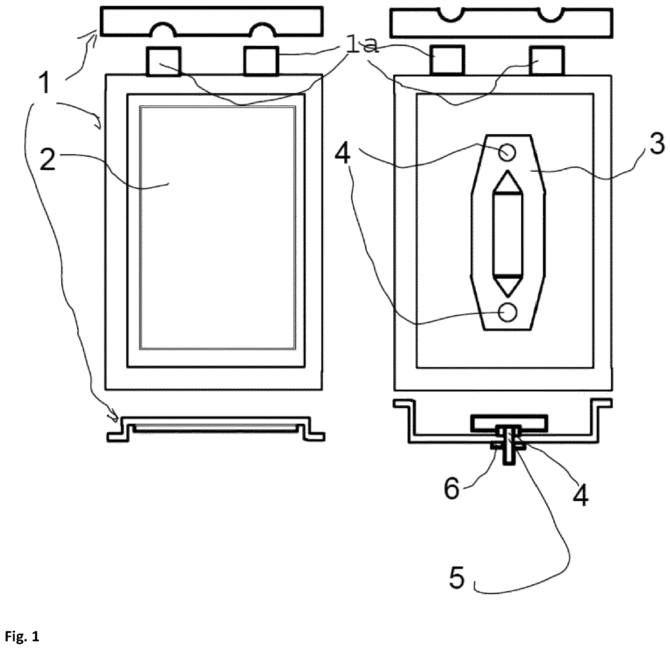

- Fig. 1: obere (links) und untere (rechts)Schalungshälften für einen Dachstein, wobei das Außenflächen-Gebäudeelement nur schematisch in einer die Falzausbildung des Dachsteins ist nicht berücksichtigenden Weise dargestellt ist und in der oberen Hälfte ein PV-Laminat vorgesehen ist, während in der unteren Hälfte ein Wärmetauscher dargestellt ist, der - wie an den ebenfalls dargestellten Schnittansichten zu erkennen ist, mit einer hydraulischen Verschraubung versehen ist, die wiederum mit einer Klemmhülse an der unteren Schalungshälfte befestigt ist- eine gleichwohl vorhandene Dichtung ist zeichnerisch nicht dargestellt;
- Fig 2: Bestandteile der Positioniereinheit;
- Fig. 3: Vorbereitete Positioniereinheit mit adaptiertem PV-Laminat und Wärmetauscher
- Fig. 4: Fixierung der vorbereiteten Positioniereinheit an der unteren Schalung;
- Fig. 5: Auflegen der oberen Schalung und Anpressen der unteren Schalung mit der fixierten Positioniereinheit;
- Fig. 6: Verklemmen der beiden Schalhälften mit Federklemmen (Situation unmittelbar vor Einfüllen des Gusskörpermaterials);
- Fig. 7: Federklemmen für das Zusammenhalten der Schalhälften;
- Fig. 8: zur Latentwärmenutzung mittels Eisspeicher;
- Fig 9: beispielhaftes System zur Gewinnung und Nutzung von solarer Wärme und Umweltwärme;
- Fig. 10: Gehäuse für Eisspeicher mit großer Austauschfläche;
- Fig. 11: Einsatz für Eisspeicher mit großer Austauschfläche;
- Fig. 12: Einsatz von Fig, 11 in weiterer Ansicht;
- Fig. 13: Beispiel für ein großflächiges Außenflächen-Gebäudeelement.

Nach Fig. 1 wird zur Herstellung eines Außenflächen-Gebäudeelementes mit einem Gussmaterialgrundkörper, zumindest einem Fluidwärmetauscher und einer Photovoltaikanordnung, wobei der Gussmaterialgrundkörper aus Beton bzw. Mörtel gebildet ist, der zumindest einen Fluidwärmetauscher und eine im Gussmaterialgrundkörper eingegossene Fluidführung umfasst und der Fluidwärmetauscher relativ zur Photovoltaikanordnung durch ein in dem Gussmaterialgrundkörper eingegossenes Positioniermittel fixiert ist, eine Schalung 1 aus einer oberen und einer unteren Schalungshälfte verwendet. Dabei sind die beiden Schalungshälften jeweils in der Seitenansicht ohne Betoneinfüllstutzen 1 (oberer Teil von Fig. 1), in der Draufsicht in die Schalung hinein (mittlerer Teil von Fig. 1) und im Schnitt durch die Schalung (unterer Teil von Fig. 1) gezeigt.

Im mittleren Teil sind dabei die Betoneinfüllstutzen 1a angedeutet, über welche nach Zusammenbau das Gussmaterial in die Schalung gelangt. Weiter ist im mittleren Teil von Fig. 1 in der oberen Schalungshälfte (links) das PV-Laminat 2 und in der unteren Schalungshälfte (recht) der Fluidwärmetauscher 3 zu erkennen. Bei dem Fluidwärmetauscher 3 handelt es sich, wie erkennbar, um einen Twin-Channel-Wärmetauscher mit demnach vergleichsweise großer Oberfläche.

Wie aus dem unteren Teil von Fig. 1 zu erkennen ist, führen vom Wärmetauscher 3 Fluidanschlüsse 4 durch jeweilige Öffnungen 5 in der Schalung, die als hydraulische Verschraubung 5 gebildet sind, wobei eine Klemmhülse 6 zur Verspannung bzw. Fixierung an der unteren Schalungshälfte dient und somit die Positioniervorrichtung ebenfalls dadurch relativ zur Schalung fixiert werden kann, wenn diese wiederum an dem Wärmetauscher 3 befestigt wird, wie ersichtlich sein wird. Nicht dargestellt sind dagegen die Herausführungen für die elektrischen Anschlüsse des PV-Laminats.

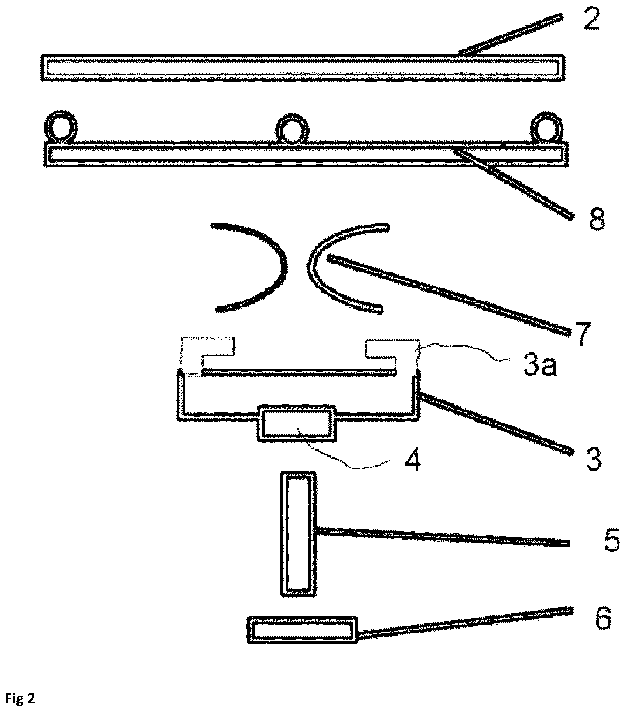

Fig. 2 zeigt nun, wie das PV-Laminat 2 mit dem Wärmetauscher 3 verbunden wird, der an seinen Anschlüssen 4 - wie beschrieben- über die hydraulische Verschraubung 5 und die Klemmhülse 6 mit der unteren Schalung verbunden ist, und zwar hinreichend fest, um ihn auch bei Einströmen des Gussmaterials an der Schalung zu fixieren. Dass diese feste, also hinreichend unbewegliche Verbindung lösbar ist, um die Schalung nach Aushärtung des Gussmaterials entfernen und wiederverwenden zu können, sei erwähnt. Hier hat fest also nicht die Bedeutung von unlösbar.

Der Wärmetauscher hat nun an seiner Oberseite, also auf der dem PV-Laminat 2 zugewandten Seite Aufnahmelager für Federn 7, mit denen das PV-Laminat gegen die obere Schalungshälfte gepresst werden kann, wodurch zugleich die Photovoltaikanordnung relativ zum Fluidwärmetauscher positioniert wird, und durch ein in dem Gussmaterialgrundkörper mit einzugießendes Positioniermittel fixiert ist.

Dabei pressen die Federn 7 nicht unmittelbar auf das als Photovoltaik-Laminat ausgeführte Photovoltaik-Element, sondern über einen vorgefertigten Körper, der vorliegend aus Metall gebildet ist, der aber in anderen Ausführungen auch aus Kunststoff oder beispielsweise Graphit gebildet sein könnte. Dieser vorgefertigte Körper 8 besteht aus miteinander verklebten Längs- und Querstreben von hier 3mm Durchmesser, was eine ausreichende Stabilität gewährleistet, um die von den Federn erzeugten Kräfte hinreichend gleichmäßig auf die PV-Laminate zu übertragen und so zu gewährleisten, dass diese während der Gusskörperbildung gegen die Oberseite der Schalung gepresst bleiben. Es sei erwähnt, dass die Positioniermittel und damit auch der Körper 8 auf die Geometrie des jeweils herzustellenden Außenflächen-Gebäudeelements leicht so anzupassen sind, dass alle Ränder des PV-Laminates umlaufend ausgesteift werden, wie dies in Fig. 2 mit den drei auf den Längseiten des PV-Laminats angeordneten Stäben aufgezeigt ist. Bevorzugt kann die Aussteifung durch Körper 8 erreicht werden, da eine stützende Unterkonstruktion aus dünnen miteinander fixierten Stäben gebildet wird, was eine leichte Anpassung an unterschiedlichen Geometrien erlaubt und wenig Material erfordert.

Dass es ohne das hier offenbarte Positioniermittel bislang allenfalls dann gelungen war, die PV-Laminate an der Kunststoffschalung zu fixieren, wenn doppelseitiges Klebeband verwendet wurde, sei erwähnt. Insbesondere bei PV-Laminaten, die entsprechend einer gewellten Dachsteingeometrie in eine gekrümmte Form zu bringen sind, kam es mit bisherigen Ansätzen, Thermie und Photovoltaik in einem gewellten Dachsystem zu kombinieren, zu Ablösungen der PV-Laminate vor dem eigentlichen Vergießen, was vor allem bei den sehr gut fließfähigen Hochleistungsfeinkornbetonen problematisch war.

Das hier beschriebene Positioniermittel ermöglicht hingegen nicht nur eine industrielle Fertigung, sondern gewährleistet auch, das am Positioniermittel befestigte PV-Laminat an die oberseitige Schalung zu pressen- und damit relativ zum Wärmetauscher zu fixieren- dass das PV-Laminat auch beim Befüllen der Schalung nicht vom flüssigen Hochleistungsfeinkornbeton hinterlaufen wird. In einer besonders bevorzugten Variante ist das Positioniermittel insofern zugleich ein Pressmittel für das während des Vergießens erfolgende Pressen des PV-Laminates gegen die Schalung.

Dabei ist auch eine automatisierbare Fixierung des Positioniermittels am Wärmetauscher ermöglicht und es sind nach dem nach dem Erhärten und Entschalen des Außenflächen-Gebäudeelementes keine aufwändigen Nacharbeiten zur vorsichtigen Freilegung der PV-Laminate mehr erforderlich.

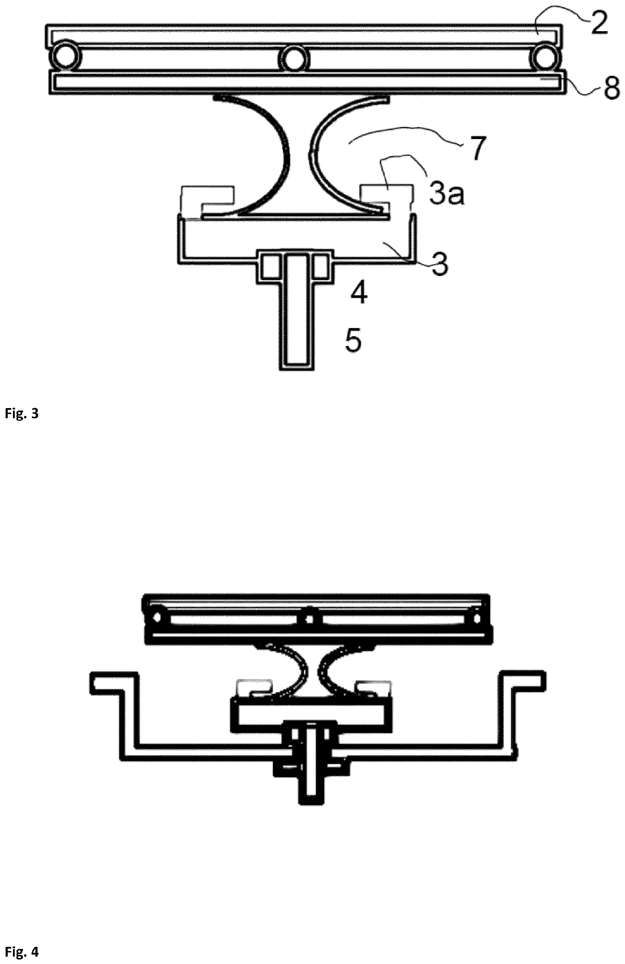

Das gezeigte Positioniermittel und dessen Fixierung am Wärmetauscher erlaubt auch, den Prozess der Zusammenführung des Positionierungsmittels zunächst mit der unteren und im Weiteren mit der oberen Schalungshälfte zu automatisieren. Die Anordnung kann zum Beispiel, aber nicht nur, zur Herstellung eines Dachsteins als beispielhaftem Außenflächen-Gebäudeelement verwendet werden. Dazu sei darauf verwiesen, dass die Montage der Elemente vor dem Vergießen erfolgen kann wie aus den Figuren 3 bis 6 ersichtlich; der Fachmann wird verstehen, dass sich die dortigen Schritte gut automatisieren lassen.

Dabei wird - nicht dargestellt - zunächst dass PV-Laminat vorbereitet. Damit es zum dauerhaften Verbund der PV-Laminate mit dem erhärteten Hochleistungsfeinkornbeton kommt, wird auf die Laminatrückseite eine Haftbrücke mittels eines geeigneten Klebers in Form der Absandung mit groben abgesiebten Sandkörnern aufgebracht. Ist die Haftbrücke und Beschichtung erhärtet, kann das Laminat mit verbundener Positionierung direkt in den Schalungen eingesetzt und verbaut werden.

Es kann dann gemäß Fig. 3 die Einheit aus Fluidwärmetauscher 4, Federelementen 7, vorgefertigtem Körper 8 und Photovoltaik-Laminat 2 gebildet werden, die in Fig. 3 gezeigt ist. Es wird für den Fachmann erkennbar sein, dass die PV-Laminate beim Zusammenführen der Schalungshälfte mittels der aussteifenden Stützstruktur 8 zuverlässig und dicht an die Schalungsoberfläche angepresst werden, was die Ausbildung eines Hohlraums vermeidet. Es ist auch ersichtlich, dass, um den Anpressdruck sicherzustellen, auf dem Wärmetauscher Fixierungspunkte für die Ankopplung des Positioniermittels vorgesehen sind, vgl. Bezugszahl 3a, wo die einen Enden der Klemmfedern fixiert werden. Das andere Ende wird an unterseitig der Stützkonstruktion der Positioniereinrichtung anzuordnenden Halterungen befestigt (nicht detailliert in der Fig. dargestellt). Alternativ kann anstelle unterseitig der Stützkonstruktion der Positioniereinrichtung anzuordnenden Halterungen auch eine Formung der respektiven Klemmfederenden dergestalt gebildet werden, dass diese Enden unmittelbar mit den stabförmigen Elementen der Stützkonstruktion in einen das PV-Laminat-Pressen erlaubenden Eingriff, also einen abstützenden Eingriff treten.

In dem Zustand von Fig. 2 sind die Klemmfedern, je zwei gegenüberliegend an beiden Enden der Wärmetauscher, noch nicht gespannt. Erst mit dem Auflegen und dem Andrücken der oberen Schalung auf die untere Schalung werden die Klemmfedern der Positioniereinrichtung aktiviert und so das PV-Laminat an die obere Schalung gedrückt.

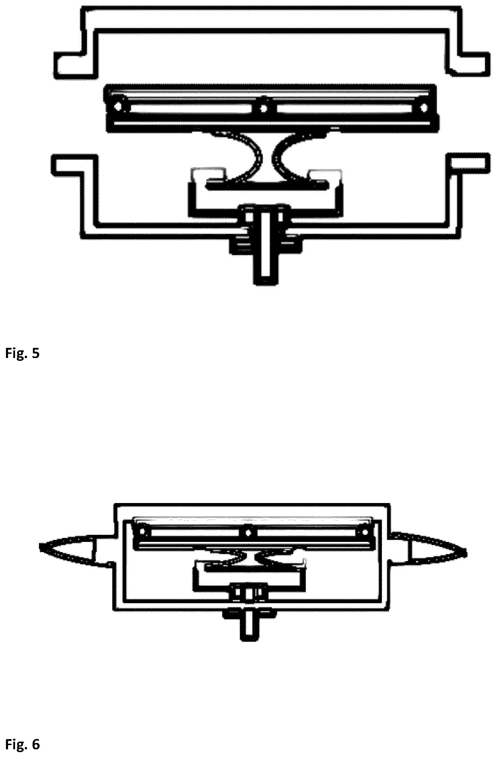

Die so gebildete Einheit wird dann an der Unterseite der Schalung fixiert, vgl. Fig. 4, was keine große Belastung erzeugt und damit problemfrei ist. Dann wird die Oberseite der Schalung aufgesetzt, vgl. Fig. 5. Dabei wird dann die gewünschte und vorteilhafte Anpressung des PV-Laminats durch die Federelemente erzielt. Danach können Ober- und Unterseite der Schalung miteinander so verbunden werden, dass Beton bzw. Mörtel einströmen kann. Fig.6 zeigt die für das Gießen vorbereitete Schalung mit Fluidwärmetauscher und PV-Laminat, wobei eine um den Schalungsrand umlaufende Dichtung nicht dargestellt ist.

Dass die einzelnen Komponenten des Positioniermittels so ausgesteift sind, dass die Photovoltaikelemente reproduzierbar in der Gussform gehalten werden und mit dem Zusammenführen der beiden Schalungshälften in Anbetracht der Fixierung des Positioniermittels am Wärmetauscher eine aufwändige Verklebung etc. nicht mehr erforderlich ist, sei erwähnt. Dies gilt selbst für Fälle, bei denen, anders als im dargestellten Ausführungsbeispiel, sehr lange durchgehenden Rohre für die Wärmetauscher verwendet würden.

Wird das Außenflächen-Gebäudeelement nach der Erhärtung des Betons entschalt, lässt sich die obere Schalung direkt entfernen, da der Einsatz der bislang eingesetzten doppelseitigen Klebebänder entfällt. Eine weitere zeitaufwändige Nachbearbeitung der dachsichtigen Oberflächen ist dabei nicht mehr erforderlich.

Das Ausführungsbeispiel zeigt demnach am Beispiel eines flachen Dachsteins, der als Außenflächen-Gebäudeelement die thermischen und solarelektrischen Energien, die an der Gebäudehüllfläche anfallen, aufnehmen und der Nutzung zuführen soll, wie das Positioniermittel aufgebaut sein kann und erlaubt, die Arbeiten zum Zusammenbau der Schalungen zu vereinfachen, um so eine industrielle Fertigung der hybriden Dachsysteme zu ermöglichen. Dabei ist, wie für den Fachmann erkennbar sein wird, vorteilhaft, dass die PV-Laminate beim Zusammenführen der Schalungshälfte mittels einer aussteifenden Stützstruktur 8 zuverlässig und dicht an die Schalungsoberfläche angepresst werden, was die Ausbildung eines Hohlraums vermeidet. Es ist auch ersichtlich, dass hier, um den Anpressdruck sicherzustellen, auf dem Wärmetauscher Fixierungspunkte für die Ankopplung des Positioniermittels vorgesehen sind, vgl. Bezugszahl 3a, wo die einen Enden der Klemmfedern fixiert werden, während in dem speziellen Ausführungsbeispiel die anderen Enden der Klemmfedern an den unterseitig der Stützkonstruktion der Positioniereinrichtung anzuordnenden Halterungen befestigt wird.

Wie zuvor erwähnt, erlaubt es das erfindungsgemäß verwendete Positioniermittel, die erfindungsgemäßen Außenflächen-Gebäudeelemente präzise und reproduzierbar zu fertigen. Es ist daher möglich und auch bevorzugt, wenn die Dicke der einhüllenden Grundkörpermasse an der dünnsten Stelle und/oder im Mittel zwischen Grundkörpermasse-Grenzfläche, insbesondere innenliegender Grenzfläche und grenzflächiger Seite der Fluidführung bevorzugt nicht mehr als 5mm beträgt. Mit anderen Worten muss eine besonders dicke Ausführung nicht großflächig und durchgehend gewährleistet sein.

Letztlich kann so eine robotisch geführte Herstellungsanlage realisiert werden, die neben den Teilkomponenten der Betonherstellung, der Schalungsvorbereitung, des Einfüllens des selbstverdichtenden Feinkornbetons wie auch der Entschalung nach dem Erhärten in einer automatisierten Anlage ermöglicht. Auch lassen sich die Grundkörper-Materialdicken vergleichsweise gering halten, da für den Einbau industrielle Fertigungsstraßen zum Einsatz kommen, die Einbautechnologien ermöglichen, die bei einer händischen Fertigung handwerklich nicht geleistet werden kann. Folglich müssen die Außenflächen-Gebäudeelemente nicht mehr überdimensioniert werden.

Um mit den gezeigten Formen und Positioniermitteln Dachsteine als beispielhafte Außenflächen-Gebäudeelemente herzustellen, wird erfindungsgemäß Beton bzw. Mörtel verwendet, insbesondere Feinkornbeton. Im nachfolgenden werden daher besonders geeignete Beispiele für Feinkorn-Rezepturen erläutert, die für den Gussmaterialgrundkörper eines erfindungsgemäßen Außenflächen-Gebäudeelementes verwendbar sind und Bindemittel, Zusatzstoffe, Sand, Fließmittel, Entlüfter sowie Pigmente umfassen. Es wird dabei offenbart, welche Feinkorn-Rezepturen für Bauelemente der Erfindung ohne weiteres geeignet sind.

Als Bindemittel wird beispielhaft die Verwendung der folgenden, für Zwecke der Erfindung ohne weiteres geeigneten Zement-Qualitäten, vorgeschlagen: CEM II/B-M (T-LL) 52,5 N; CEM II/B-S 52,5 R; CEM II/A-M (S-LL) 52,5 R; CEM II/B-M (V-LL) 42,5 R; CEM II/A-LL 52,5 R; CEM II/B-M (S-LL) 52,5 N-AZ; CEM II/C-M (S-LL) 42,5 N-NA; CEM IV/A (P) 42,5 N; CEM I 52,5 R und CEM I 42,5 R.

Während die genannten Zement-Qualitäten ohne weiteres geeignet sind, um die gewünschten Bauelemente herzustellen, wird zu verstehen sein, dass die unterschiedlichen Zement-Qualitäten aufgrund unterschiedlicher Eigenschaften unterschiedlich bevorzugt sein werden. So wird die Verwendung von CEM I 52,5 R oder CEM I 42,5 R insofern als nachteilig angesehen, weil sie eine besonders hohe CO2-Last bedingt. Aufgrund der ökologischen Bewertung werden auch Zement-Qualitäten wie CEM II/A-M (S-LL) 52,5 R und CEM II/A-LL 52,5 R als eher weniger bevorzugt angesehen; bevorzugt sind demgegenüber Zement-Qualitäten wie CEM II/B-M (T-LL) 52,5 N; CEM II/B-M (V-LL) 42,5 R und CEM II/B-M (S-LL) 52,5 N-AZ. Besonders bevorzugt werden aktuell aufgrund der ökologischen Bewertung die Zement-Qualitäten CEM II/C-M (S-LL) 42,5 N-NA und CEM IV/A (P) 42,5 N, wobei mit letzterer eine sehr langsame Erhärtung zu erwarten ist, was sich je nach Fertigungsprozess als vorteilhaft erweisen kann, um längere Verarbeitungszeiten zu gewährleisten, oder aber als nachteilig angesehen wird, weil sich ein ansonsten schnellerer Fertigungsprozess in die Länge zieht.

Es gibt zudem alternative Bindemittelsysteme zu den heute noch bevorzugt eingesetzten klinkerbasierten Zementen. Hier sei beispielhaft Celitement erwähnt, das ebenfalls ohne weiteres verwendbar ist und als ökologisch sehr gut zu bewerten ist. Celitement bietet überdies aufgrund seiner weißen Farbtönung eine sehr gute Möglichkeit, die Betongrundkörper der Außenflächen-Gebäudeelemente durch den Einsatz von handelsüblichen pulverförmigen Betonpigmenten oder - besser noch - durch den Einsatz von Flüssigfarben, wie diese zur Einfärbung von zementär gebundenen Betonwaren in der industriellen Betonwarenfertigung zunehmend Verwendung finden, in jeglichem Farbton anbieten zu können, in dem heute bekannte und auf dem Markt befindliche Dachsteinsysteme auch angeboten werden, so dass die erfindungsgemäßen solarhybriden Außenflächen-Gebäudeelemente nicht farbbeschränkt sind.

Um die CO2-Last zu begrenzen und auch die Frisch- und Festbetoneigenschaften des Hochleistungsfeinkornbetons für die Herstellung der Außenflächen-Gebäudeelemente zu verbessern, können ergänzend zum gewählten Bindemittel Betonzusatzstoffe zugegeben werden. Diese können sich vorteilhaft auf die Verarbeitbarkeit vom Mischen, über das Pumpen bis hin zum vollständigen Verfüllen der Schalung auswirken. Zudem lassen sich gezielt Festbetoneigenschaften optimieren, da bei alleiniger Zementverwendung infolge der bekanntlich mengenmäßig großen Zugabe von Zementklinker bei Hochleistungsfeinkornbetonen die erhärtenden Betonelemente infolge der sich einstellenden Schwinddeformationen zu Rissbildungen neigen.

Wird der Zementgehalt durch den Einsatz von Betonzusatzstoffen reduziert, sind die Betonelemente dabei geringeren Eigen- und Zwangsspannungen unterworfen und die Rissbildungsgefahr nimmt ab. Dies ist gerade dort von Bedeutung, wo besonders langlebige Produkte gewünscht werden.

Neben inerten Betonzusatzstoffen (z.B. Kalksteinmehle) finden vielfach reaktive Betonzusatzstoffe Verwendung (z.B. die Gruppe der Puzzolane), die nicht nur erlauben, die Ökobilanz der Betonelemente zu verbessern, sondern dank ihres Beitrags zur Festigkeitsbildung auch eine Verbesserung der mechanischen Leistungsmerkmale wie auch der Dauerhaftigkeit zur Folge haben. Als Betonzusatzstoffe seien beispielsweise Flugaschen, Ölschieferabbrand, Kalksteinmehl, Metakaolin und Phonolith genannt. Diese Zusatzstoffe bewirken unterschiedliche, gewünschte Eigenschaften. So tragen Flugaschen zu einer guten Verarbeitbarkeit bei, Phonolith trägt zu einer guten Reaktivität bei und Ölschieferabbrand und Metakaolin bewirken sowohl eine gute Reaktivität als auch eine gute Verarbeitbarkeit.

Beton-Entlüfter unterstützen die Entlüftung des in die Schalung einzufüllenden Frischmörtels, indem die Menge an Luft, die beim Mischprozess zwangsläufig in den Frischbeton bzw. -mörtel untergemischt wird, nach dem Einbringen in die Schalung beim nachfolgenden Verdichten wieder gut entlüften kann. Im Falle der hier beschriebenen Außenflächen-Gebäudeelemente kommt vorzugweise ein selbstverdichtender Beton zum Einsatz, der bei seiner Fließbewegung in die Schalung aber vollständig entlüften soll, um unerwünschte Lufteinschlüsse in der Feinbetonmatrix zu vermeiden. Daher werden bevorzugt auf die Rezeptur angepasst - Zusatzmittel für die Entlüftung verwendet. Geeignet sind eine Vielzahl kommerziell verfügbarer Entschäumer; nur beispielsweise genannt seien SikaControl - 300 per Fin, Optec 960 von Grace, Centrament Surface Pro für porenarmen Beton in Sichtbetonqualität, ALPHALITH^{®} Porex FE (BV) und ALPHALITH^{®} Porex DF 50 (BV).

Als Fließmittel sind vor allem handelsübliche Polycarboxylat-ethern (PCE) verwendbar. Genannt seien etwa nur beispielhaft PCE-Fliessmittel von Sika, z.B. aus der Sika Visco Flow Produktreihe wie Sika ViscoFlow-26, Sika ViscoFlow-28, Sika ViscoFlow-32, Sika ViscoFlow oder aus der ViscoCrete Produktreihe.

Als Sand werden Sande geringer Korngrößen bevorzugt, d.h. vor allem solche mit den Korngrößen 0/2 mm und 0/4 mm. Verwendbar sind dabei vorteilhaft auch feine gebrochene Sande wie gebrochener Basalt oder gebrochener Kalkstein, jeweils mit den Korngrößen 0/2 mm; 0/4 mm. Vorteilhaft sind dichtere Gesteinskörnungen, z.B. Basalt, da diese i.A. auch eine höhere Wärmeleitfähigkeit aufweisen und somit eine bessere Ableitung der solar bzw. aus der Umwelt am Außenflächen-Gebäudeelement aufgenommene Wärme dem integrierten Wärmetauscher zuleiten kann.

Als Pigmente können wie zuvor aufgezeigt alle für Beton üblichen Pigmente in fester oder in flüssiger Form der marktgängigen Produktsysteme eingesetzt werden. Die handelsgängigen Farbtöne, z.B. der Fa. Harold-Scholz GmbH, lassen sich untereinander in beliebiger Form abmischen bzw. können als vorabgemischtes Compound bezogen werden. Besonders anspruchsvolle Einfärbungen, wie diese Au-βenflächen-Gebäudeelemente abverlangt werden, lassen sich besonders mit Flüssigfarben realisieren. Gerade bei den hier erforderlichen feinen, zementgebundenen Mischungen, können mit dem umfangreichen farbspektrum der Flüssigfarben nahezu alle Farbtöne für den Betongrundkörper für das jeweilige Dach- oder Fassadensystem erzielt werden.

Grundsätzlich bedarf es oftmals der gemeinsamen Verwendung von mehreren unterschiedlichen Pigmenten bzw. Flüssigfarben, um den gewünschten Farbton zu treffen. Erwähnt sei, dass zwar aufgrund der typischen Farbgebung von Dachsteinen in der nachfolgenden Rezeptur nur rote und schwarze Pigmente aufgeführt sind, dass dies die Erfindung aber deswegen nicht als auf die Verwendung nur roter und/oder schwarzer Pigmente bzw. Flüssigfarben beschränkt anzusehen ist und im Übrigen die Verwendung von Pigmenten auch nicht zwingend ist- vielmehr sind auch ohne weiteres pigmentfreie Rezepturen verwendbar, sofern die sich dann ergebende Farbe akzeptabel ist.

Die genannten Bestandteile können beispielsweise in folgenden Mengenverhältnissen verwendet werden, um eine Menge von jeweils 100 Außenflächen-Gebäudelementen herzustellen:

| **Bestandteile** | **Menge von** | **bis** |
|---|---|---|
| Bindemittel | 70kg | 150 kg |
| Zusatzstoffe | 20kg | 70 kg |
| Sand | 200kg | 300 kg |
| Fließmittel | 3kg | 10 kg |
| Entlüfter | 2kg | 6 kg |
| Pigment rot | 0kg | 10 kg |
| Pigment schwarz | 0kg | 35 kg |

In einem praktischen Ausführungsbeispiel wurde zu Versuchszwecken eine Anzahl von Dachsteinen nach der Erfindung hergestellt, die optisch zu kommerziell von der Fa. Laumann erhältlichen Dachsteinen passen sollen. Dazu wurden die Bestandteile in folgenden Mengen für die Herstellung von 100 Dachsteinen verwendet:

| | |
|---|---|
| Bindemittel | 120,00 kg |
| Zusatzstoffe | 40,00 kg |
| Sand | 240,00 kg |
| Fließmittel | 7,00 kg |
| Entlüfter | 3,00 kg |
| Pigment rot | 5,00 kg |
| Pigment schwarz | 30,00 kg |

Mit der angegebenen Rezeptur konnten Dachsteine gemäß der Erfindung hergestellt werden, die sowohl von ihrer Form her als auch bezüglich ihrer Farbe den kommerziell verfügbaren Dachsteinen so eng entsprachen, dass sich bei der typischen Entfernung zwischen einem vor einem Gebäude befindlichen Beobachter und dem Dach zwischen den erfindungsgemäßen Elementen und den kommerziell verfügbaren Elementen keine visuellen Unterschiede ergaben. Damit ist es möglich, erfindungsgemä-βe Dachsteine mit herkömmlichen Dachsteinen gemeinsam zu verbauen, ohne dass die optische Erscheinung eines Daches beeinträchtigt wird.

Diese Rezepturen erlauben es zugleich, den Klinkeranteil in den Bindemitteln stark zu reduzieren, so dass die solarhybriden Dachsteine nach der vorliegenden Zusammensetzung einen wichtigen Schritt zu der mit dem EU Green Deal angestrebten Klimaneutralität darstellen und den Zielen der Ressourcenschonung entsprechen.

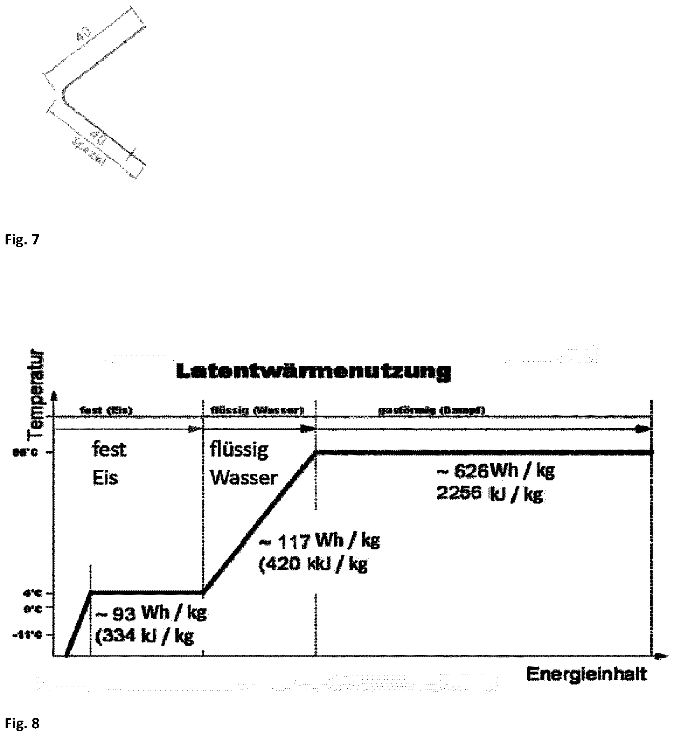

Es wurde bereits diskutiert, dass die Außenflächen-Gebäudeelemente insbesondere dort verwendbar sind, wo Latentwärme genutzt werden soll und dabei insbesondere auf Eisspeicher verwiesen. Dass dabei eine enorme Wärmemenge nutzbar wird, ist per se bekannt, wie Fig. 8 zeigt, wo die mit Latentwärmenutzung verbundenen Energieinhalte dargestellt sind.

Es sei darauf hingewiesen, dass die in den Außenflächen-Gebäudeelementen integrierten Wärmetauschereinheiten nicht nur erlauben, die bei solarem Energieangebot die vom Dach- oder Fassadenelement mit der Besonnung absorbierte Solarwärme über die Feststoffmatrix an den Wärmetauscher weiterzuleiten. wo diese vom durch den Wärmetauscher geführten Wärmeträgermedium aufgenommen wird- die beim Durchfließen der hintereinander geschalteten Dach- oder Fassadensysteme vom Wärmeträgermedium aufgenommene Wärme kann dann entweder vom Heizsystem des Gebäudes, i.d.R. einer Sole-Wasser-Wärmepumpe, genutzt werden. Die mit den Außenflächen-Gebäudeelementen aufgenommene Wärme kann aber auch direkt einem Wärmespeicher zugeführt werden, um dort die auf den Außenflächen gewonnene Solarwärme bis zur späteren Nutzung zwischenzuspeichern.

Werden die hier beschriebenen Außenflächen-Gebäudeelemente und die darauf abgestimmte Anlagentechnik des Heizsystems gar mit einem Eisspeicher gekoppelt, lässt sich über die normalerweise in Heizsystemen genutzte sensible Wärme hinaus auch die Latentwärme des Wassers im Speicher nutzen. Schließlich werden beim Erhitzen von einem Liter flüssigem Wasser (~1 kg) von der Gefrierpunkttemperatur bis zur Siedetemperatur von 100 °C eine Wärmemenge von etwa 117 Wh einspeichem, vgl. Fig. 8. Diese hohen sensiblen Wärmeinhalte des Wassers werden beispielsweise in Hochtemperaturspeichern genutzt. Derartige Speicher erfordern aber eine besonders effiziente Dämmung der Behälterwandung, um die eingespeicherte Wärme ohne größere Verluste über einen bestimmten Zeitraum halten zu können.

Wird hingegen ein Eisspeicher in Verbindung mit den Außenflächen-Gebäudelementen und einer auf die Latentwärmenutzung angepasste Sole-Wasser-Wärmepumpe zum Einsatz gebracht, kann allein durch die Nutzung der mit dem Phasenwechsel von flüssig zu fest einhergehenden Freisetzung der Latentwärme mit der Wärmepumpe eine Latentwärme von 93 Wh je Liter Wasser, das gefriert, der Raumwärme zugeführt werden. Der mit der Wärmepumpe durch den zur Raumwärmebereitstellung erzwungene Wärmeentzug bewirkt unterhalb des Gefrierpunkts den Phasenwechsel, der solange anhält, bis das gesamte Wasser von der flüssigen in die feste Phase überführt wurde. Während dieses Prozesses verharrt die Temperatur des Wasser-Eis-Gemisches bei der Gefrierpunktstemperatur. Ist das gesamte Wasser in die feste Phase überführt, nimmt mit weiterem Wärmentzug aus dem Eisspeicher die Temperatur des Eises ab. Dabei kann aber nur noch sensible Wärme dem Eis entzogen werden. Da die Arbeitszahl bzw. die Effizienz der Wärmeentnahme durch die Wärmepumpe umso ungünstiger wird, je größer der Temperaturunterschied zwischen der Vorlauftemperatur der raumseitigen Wärmeübergabesysteme und der Soletemperatur ist, macht es energetisch keinen Sinn, die Temperatur des Eisspeichers deutlich unterhalb der Gefrierpunkttemperatur abzusenken. Dies ist auch nicht erforderlich, da allein der Phasenwechsel um den Gefrierpunkt einen Latentwärmeentzug in einer Größenordnung ermöglicht, der beim Entzug von sensibler Wärme bei der Kopplung des Energieversorgungssystems mit Hochtemperaturspeichersystemen entspricht.

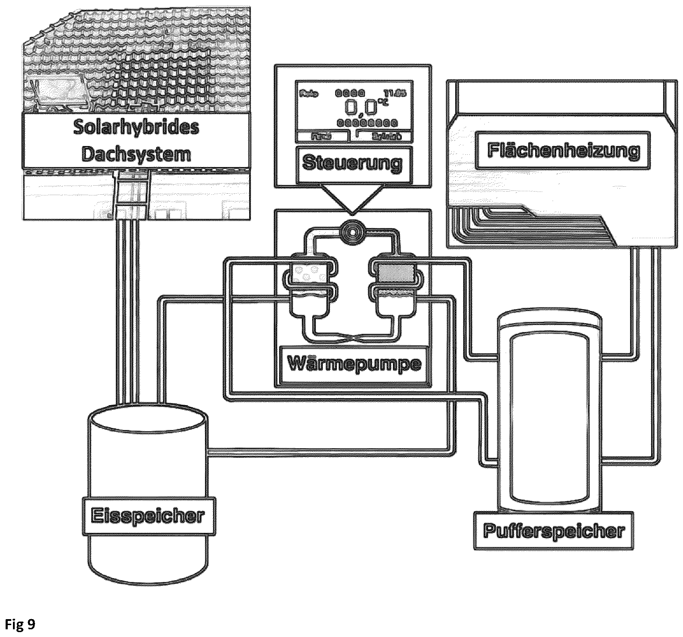

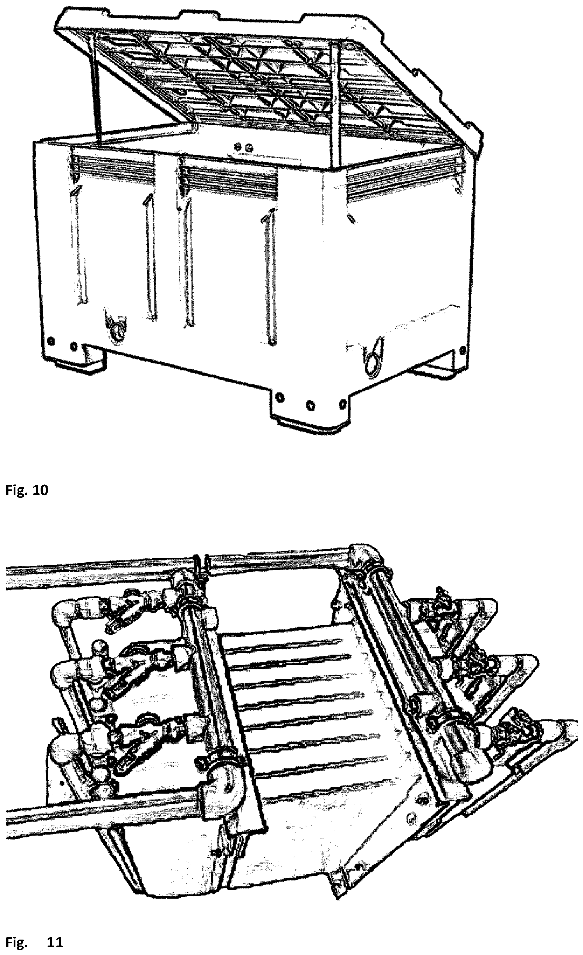

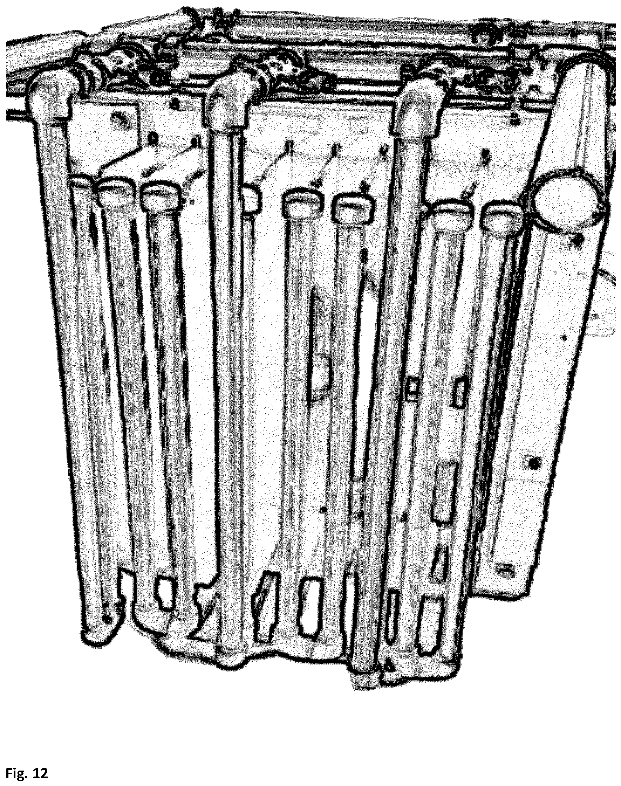

Werden die Außenflächen-Gebäudelemente mit dem Anlagenkonzept aus LowEx-Wärmeübergabesystemen, Sole-Wasser-Wärmepumpe und Eisspeichersystem kombiniert, bietet diese systemische Kopplung gar die Möglichkeit, die Eisspeicher während der Heizperiode zu regenerieren, d.h. die nicht weiter thermisch nutzbare im Speicherbehälter befindliche Eismasse wieder zu schmelzen, so dass im Nachgang die Sole-Wasser-Wärmepumpe dem Eisspeicher, in dem nun wieder Wasser in der flüssigen Phase vorliegt, Latentwärme durch den erneuten Gefriervorgang entzogen wird. Ein Beispiel für ein entsprechendes System ist in Fig, 9 dargestellt. Die Fig. 10 zeigt ein für den Eisspeicher von Fig. 9 verwendbares Gehäuse, Fig. 11 und 12 stellen den Wärmetauscher-Einsatz für diese Gehäuse dar, wobei zwei unterschiedliche Ansichten des gleichen Wärmetauscher-Einsatzes gezeigt sind.

Dieses System ermöglicht durch seine dafür geeignete Steuerung und Verrohrung, dass dem Eisspeicher die für das Schmelzen des Eises erforderliche Schmelzwärme zugeführt wird. Im hier angesprochenen Systemansatz übernehmen diese Aufgabe die Außenflächen-Gebäudeelemente. Selbst während der Heizperiode herrschen in allen normalen Klimazonen Deutschlands Außentemperaturen von zumeist mehr als 5 °C vor. Erläutert sei dies an aktuellen Wetterdaten im Winter des Prioritätsjahres. Entsprechend den Beobachtungen des Deutschen Wetterdienstes (DWD) sind die Winter in Deutschland verglichen mit den Referenzperioden stetig zu warm. So lag das Gebietsmittel z.B. in der Winterperiode 2022/2023 in Deutschland bei 2,9 Grad Celsius (°C) und damit 2,7 Grad über dem Wert der international gültigen Referenzperiode 1961 bis 1990. Im Vergleich zur aktuellen und wärmeren Vergleichsperiode 1991 bis 2020 betrug die positive Abweichung 1,5 Grad. Die kälteste, ja eisige Phase des Winters erlebte Deutschland in der zweiten Dezemberdekade. Hier wurde in Heinersreuth-Vollhof, Landkreis Bayreuth, am 18.12. mit -19,3 °C der bundesweit tiefste Winterwert gemessen. Zum Jahreswechsel traten dann Rekordtemperaturen auf, die am 31.12. in der Spitze über 20 °C erreichten. Am wärmsten war es an der oberbayerischen Station Wielenbach mit 20,8 °C.

Den statistischen Daten lässt sich entnehmen, dass während einer Extremkälteperiode die Außentemperatur nur über wenige Tage hinweg unter der Gefrierpunkttemperatur verharrt. Über weite Bereiche der Heizperiode herrschen kalte bis milde Temperaturen von 3°C bis 10 °C vor. Während dieser Tage lassen sich die Außenflächen-Gebäudeelemente in hervorragender Weise auch für die Regeneration der Eisspeicher nutzen, indem die Sole, d.h. das zwischen dem Eisspeicher, der Wärmepumpe und den Außenflächen-Gebäudeelementen geführte Wärmeträgermedium, den hybrid ausgestatten Dachelementen zugeführt wird, die sich abhängig der vorherrschenden Außentemperatur infolge der Aufnahme von Umweltwärme erwärmen. Entsprechend greift das durch die Außenflächen-Gebäudeelemente strömende Wärmeträgermedium die Wärme ab, die dann dem Eisspeicher zugeführt wird. Auch wenn die Temperatur nur wenige Grad über dem Gefrierpunkt liegt, bewirkt dies, dass an den im Eisspeicher integrierten Wärmetauschern das Eis mit einer Wärmeaufnahme schmilzt. Um eine bestmögliche Regeneration des durchgefrorenen Speichers zu ermöglichen, sollte der Eisspeicher eine größtmögliche Austauschfläche aufweisen. So werden in den Vorhaben, in denen die hier aufgezeigten Außenflächen-Gebäudeelementen erstmals zum Einsatz kommen, die Eisspeicher mit Wärmetauschern ausgestattet, die sich durch eng benachbart angeordnete Plattenwärmetauscher auszeichnen, so dass selbst während der kälteren Winterperioden bei einem Wärmeträgertemperaturniveau von nur 3 Grad die im Wärmeträgermedium nur in geringem Maß verfügbare sensible Wärme genutzt werden kann, das Eis zu schmelzen. Werden die Gradtage bestimmt, an denen der Verlauf der Außentemperaturen z.B. im Jahr 2022 einen Wert von 3 Grad unterschreitet, kann für den Raum Stuttgart entsprechend der Daten des DWD ein Wert von 120 Kd berechnet werden. Wird eine Heizgrenztemperatur von 15°C angesetzt als Temperatur, oberhalb der keine Heizwärmezufuhr benötigt wird, errechnet sich für den gleichen Standort und das gleiche Jahr eine Gradtagzahl von 1.980 Kd. Daraus kann abgeleitet werden, dass eine Regeneration des Speichers an 1.860 Kd (Kelvin-Tagen) für Heizzwecke nutzbar ist. Wird 1 Liter Wasser (entspricht 1 kg) um 1 Grad mittels der Außenflächen-Gebäudeelemente erwärmt, müssen etwa 1,17 Wh solare Wärme oder Umweltwärme aufgenommen und dem Wärmeträgerfluid zugeführt werden, um dem Eisspeicher die erforderliche Schmelzwärme zukommen zu lassen. Unabhängig von der solaren Einstrahlung, die sofort eine Erwärmung der Außenflächen-Gebäudeelemente bewirkt, können folglich mit der reinen Umweltwärmeaufnahme in der Heizperiode 77,5 Liter Wasser um 1 Grad erwärmt werden, die zur Regeneration des Eisspeichers und damit der Latentwärmenutzung genutzt werden können.

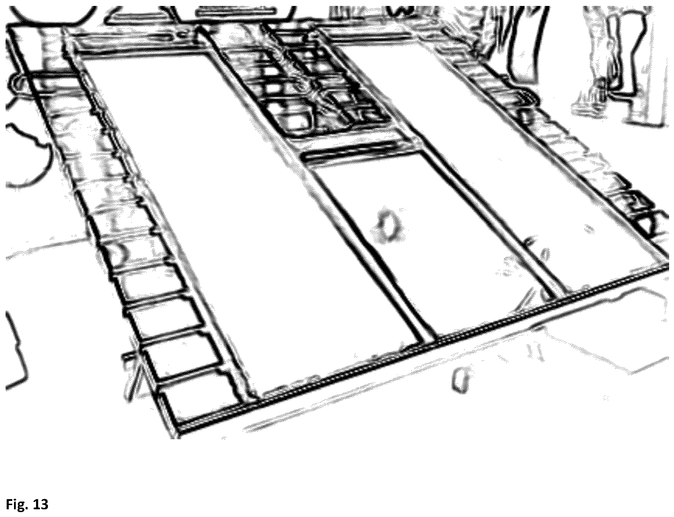

Dabei sei insbesondere diesbezüglich darauf hingewiesen, dass es möglich ist, hybride Außenflächen-Gebäudeelemente als Metalleindeckungen für Dächer auszugestalten und dabei ein Metallblech wie ein Kupferpanel an jenen Längsrändern, die auf dem Dach der Dachsteigung folgen, mit Stehfalzen zu versehen. Ein solches Außenflächen-Gebäudeelement ist beispielhaft in Fig. 13 gezeigt. Erwähnt sei, dass mit solchen Anordnungen auch historische Kupferblechdächer nachgebildet werden können. Dabei handelt es sich um ein großformatiges Außenflächen-Gebäudeelement, das mit bedrucktem Glas mit keramischem Digitaldruck versehen ist, wobei ein spezielles Druckmuster mit nichtwiederholendem Punktraster gewählt werden kann, wobei zwischen die Kupferblechscharen eingelegte großformatige PV-Module rein mechanisch fixiert sind. Zugleich sind die thermisch und elektrisch aktivierten Systemebenen gekoppelt. Es handelt sich genauer um eine Anordnung, bei der die Wärmeleitebene mit einer Wärmetauscherverrohrung durch eine insbesondere durch (transparente bzw. teiltransparente) Bedruckung farblich angepasste Glasabdeckung abgedeckt ist, die sich über die gesamte Länge des Panels in voller Breite zwischen den Stehfalzen erstreckt. Weiter sind zwischen den Stehfalzen die Fluidführungsmittel in Form einer Verrohrung angeordnet, wobei zusätzlich Wärmeleitmittel vorgesehen sind, um die Wärme der Gesamtfläche optimal zu nutzen. Als Metallblech wird hier Kupfer verwendet. Bei Verwendung der Paneele kann darunter eine hochdiffusionsoffene, aber schlagregendichte Membran angeordnet sein, um eine Beschädigung der Dachkonstruktion durch an den Außenflächen-Gebäudeelementen kondensierendes Wasser zu vermeiden. Bei hinreichend starker mechanischer Ausbildung ergibt sich so zugleich eine behelfsmäßige Deckung. Es versteht sich, dass dann bevorzugt unter der Membran eine Dämmschicht vorgesehen werden kann, um gute Wärmedämmwerte zu erzielen.

Es ist abzuschätzen, dass mit entsprechenden Anordnungen erhebliche Energieeinsparungen erzielbar sind. So sollte ein 6 m³ Eisspeichervolumen in Kombination mit einer Kupferblechnachbildung mit einer Fläche von 50 m² auf dem Dach eines an einem Hafen in Norddeutschland befindlichen Gebäudes zu einer Ersparnis von mehr als 50 % des winterlichen Heizwärmebedarfs dieses Gebäudes führen, wobei die über die Außenflächen-Gebäudeelemente gewonnene Umweltwärme genutzt werden kann, und wobei der Eisspeichers gut regeneriert werden kann, da die Sole-Wasser-Wärmepumpe fortwährend dem Wasser Latentwärme durch den wiederkehrend erzwungenen Gefriervorgang entzieht.

## Patentansprüche

1. Außenflächen-Gebäudeelement mit einem Gussmaterialgrundkörper, zumindest einem Fluidwärmetauscher und einer Photovoltaikanordnung, wobei der Gussmaterialgrundkörper aus Beton bzw. Mörtel gebildet ist, der zumindest einen Fluidwärmetauscher und eine im Gussmaterialgrundkörper eingegossene Fluidführung umfasst und der Fluidwärmetauscher relativ zur Photovoltaikanordnung durch ein in dem Gussmaterialgrundkörper eingegossenes Positioniermittel fixiert bzw. positioniert ist.

2. Außenflächen-Gebäudeelement nach dem vorhergehenden Anspruch, **dadurch gekennzeichnet, dass**
es eines von Fassadenelement und Dacheindeckungselement ist,
und insbesondere ein Dacheindeckungselement ist, das eine Fläche von mindestens 40cm*30 cm überdeckt,
wobei es bevorzugt in einer ersten, Richtung eine Abmessung von mindestens50cm, 60cm, 70cm oder 80cm aufweist
und die Abmessung in der zweiten Richtung quer dazu kleiner oder gleich der Abmessung in der ersten Richtung ist und zumindest 40, 50cm, 60cm beträgt.

3. Außenflächen-Gebäudeelement nach einem der vorhergehenden Ansprüche, **dadurch gekennzeichnet, dass** die Dicke der einhüllenden Grundkörpermasse an der dünnsten Stelle zwischen Außenfläche und Fluidführung nicht mehr als 5 mm beträgt.

4. Außenflächen Gebäudeelement nach einem der vorhergehenden Ansprüche, **dadurch gekennzeichnet, dass**
der Gussmaterialgrundkörper mit einem Feinkornbeton gebildet ist,
und/oder
die Fluidführung nichtmetallisch oder überwiegend nicht metallisch ist, und insbesondere aus Kunststoff gebildet ist
und/oder dass
die Fluidführung Kunststoffrohre und/oder Kunststoffschläuche umfasst, insbesondere PE-RT und/oder ein Aluminiumverbundrohr umfasst, welches in der Rohrwand eine Aluminiumfolie umfasst
und/oder dass
das Positioniermittel ein Kunststoff-Element und/oder ein textiles 3D-Gewebe und/oder ein Metallelement insbesondere ein Stanzteil umfasst und/oder eine aus verschiedenen Materialen zusammengesetzte optimierte Stützstruktur aufweist, die zudem jeweils Aufnahmen für die entsprechenden Fluidleitungen und die Photovoltaikelemente besitzen.

5. Außenflächen Gebäudeelement nach einem der vorhergehenden Ansprüche, **dadurch gekennzeichnet, dass** Anschlüsse für das Fluid und die Photovoltaikenergie flexibel oben seitlich vom Außenflächen-Gebäudeelement weggeführt wird.

6. Verfahren zur Herstellung eines Außenflächen-Gebäudeelementes mit einem Gussmaterialgrundkörper, zumindest einem Fluidwärmetauscher und einer Photovoltaikanordnung, **dadurch gekennzeichnet, dass** Beton bzw. Mörtel in eine Form gegossen wird, in der sich ein Positioniermittel befindet, mit welchem eine in den Gussmaterialgrundkörper einzugießende Fluidführung und zumindest Teile einer Photovoltaikanordnung in Position gehalten sind.

7. Gebäude-Wärmeversorgungs-Anordnung, die zumindest aufweist
ein oder mehrere fluidführende Wärmegewinnungs-Elemente,
insbesondere zumindest ein Außenflächen-Gebäudeelement nach einem der vorhergehenden Ansprüche,
ein fluiddurchströmtes Wärmespeichermittel, das dazu ausgebildet ist, Wärme
an durchströmendes Fluid abzugeben
oder
aus durchströmendem Fluid aufzunehmen,
mindestens eine Wärmepumpe,
und
eine Steuerung, die dazu ausgebildet ist, den Fluidfluß durch die Wärmegewinnungs-Elemente, das Wärmespeichermittel so zu steuern, dass dem Wärmespeichermittel Wärme entzogen oder aus den Energiegewinnungs-Elementen zugeführt werden kann, **dadurch gekennzeichnet, dass** die Steuerung dazu ausgebildet ist. den Fluidfluß durch den Eisspeicher mittels der Steuerung zumindest zeitweise so zu steuern, dass
Wasser im Eisspeicher zur Wärmeentnahme unter Verwendung der Wärmepumpe bis unter den Gefrierpunkt abgekühlt wird
und
eine Wiedererwärmung des unter den Gefrierpunkt abgekühlten Wassers mit Fluid erfolgt, das durch auf den Wärmegewinnungs-Elementen kondensierende Luftfeuchtigkeit erwärmt wurde.

8. Gebäude-Wärmeversorgungs-Anordnung nach dem vorhergehenden Anspruch mit einem Au-βenflächen-Gebäudeelement nach einem der vorhergehenden Ansprüche, **dadurch gekennzeichnet, dass** dieses Außenflächen-Gebäudeelement als Dach- oder Wandelement aus Feinkombeton oder Mörtel gebildet ist, insbesondere als nichtplanes Betonelement, das in partiellem Überlapp mit anderen Betonelementen verlegt ist.

9. Gebäude-Wärmeversorgungs-Anordnung nach dem vorhergehenden Anspruch, **dadurch gekennzeichnet, dass** das Dach- oder Wandelement aus Beton oder Mörtel eine Glasabdeckung über den Photovoltaik-Elementen der Photovoltaik-Anordnung umfasst, insbesondere eine transparent bedruckte Glasfläche.

10. Gebäude-Wärmeversorgungs-Anordnung nach einem der beiden vorhergehenden Ansprüche, **dadurch gekennzeichnet, dass** das fluiddurchströmte Wärmespeichermittel zusätzlich zu dem Eisspeicher weiter zumindest einen von Warmwasserspeicher oder thermisch aktiviertem Feststoffspeicher, insbesondere thermisch aktivierte Betonbauteile, umfasst und die Steuerung dazu ausgebildet ist, in den Wärmegewinnungs-Elemente erwärmtes Fluid temperaturabhängig, insbesondere rücklauftemperaturabhängig an entweder den Warmwasserspeicher bzw. Feststoffspeicher oder alternativ an den Eisspeicher zu speisen.
